# DEMANDE DE BREVET EUROPEEN

(11) **EP 4 007 027 A1**
(43) Date de publication de la demande: **01.06.2022**
(21) Numéro de dépôt: 21209644.0
(22) Date de dépôt: 22.11.2021
(51) Int. Cl.: H01M 10/052, H01M 50/116, H01M 50/131, H01M 50/218, H01M 50/233, H01M 50/262, H01M 50/50, H01M 50/514

(54) **SYSTÈME DE CONNEXION MAGNÉTIQUE D'AU MOINS UNE UNITÉ DE STOCKAGE D'ÉNERGIE ÉLECTRIQUE, UNITÉ DE STOCKAGE ET DISPOSITIF D'ALIMENTATION ASSOCIÉ**

(30) Priorité: 25.11.2020 FR 2012146
(71) Demandeur: Commissariat à l'Energie Atomique et aux Energies Alternatives, 75015 Paris (FR)
(72) Inventeur: LEJOSNE, Johann, 38054 GRENOBLE Cedex 09 (FR); JOST, Pierre, 38054 GRENOBLE Cedex 09 (FR); PANARIELLO, Remy, 38054 GRENOBLE Cedex 09 (FR); PERICHON, Pierre, 38054 GRENOBLE Cedex 09 (FR)
(74) Mandataire: Decobert, Jean-Pascal

(57) **Abrégé**

L'invention concerne un système de connexion (1) d'au moins une unité de stockage (2) d'énergie électrique, pour un dispositif d'alimentation électrique (4), le système (1) comprenant un premier module (100) de connexion magnétique configuré pour coopérer avec un deuxième module (101) de connexion magnétique et former un verrou magnétique (10). Le verrou magnétique (10) présente une première configuration dans laquelle le premier module (100) et le deuxième module (101) sont attirés magnétiquement l'un à l'autre, de façon à immobiliser l'unité de stockage dans une première position. Le verrou magnétique présente en outre une deuxième configuration dans laquelle le premier module (100) et le deuxième module (101) sont attirés magnétiquement l'un à l'autre, de façon à immobiliser l'unité de stockage (2) dans une deuxième position différente de la première position.

## Description

### DOMAINE TECHNIQUE

La présente invention concerne le domaine des systèmes de connexion d'unité de stockage d'énergie électrique. Elle trouve pour application particulièrement avantageuse le domaine de la connexion des batteries de type métal-ion, par exemple des batteries lithium-ion.

### ÉTAT DE LA TECHNIQUE

Une batterie, par exemple de type métal-ion, est composée de cellules unitaires aussi appelées unités de stockage d'énergie électrique ou accumulateurs. Plusieurs unités de stockage peuvent être raccordées électriquement en série ou en parallèle pour former un ensemble d'alimentation, communément désigné module. Plusieurs ensembles raccordés en série ou en parallèle composent un pack batterie.

Généralement, le nombre d'unités de stockage raccordées en série est modulé pour obtenir le niveau de tension requis, et le nombre d'unités de stockage raccordées en parallèle est modulé pour obtenir la puissance à fournir. Le raccordement en série ou en parallèle peut se faire au niveau des unités de stockage et/ou des ensembles d'alimentation avec une grande variété de topologies de câblage. Ces raccordements sont généralement réalisés via un bus de puissance (désigné en anglais par « *busbar* »).

L'architecture électrique et mécanique des batteries est donc modulée selon l'alimentation visée. Afin de permettre cette modularité, les architectures communément utilisées sont volumineuses et complexes, ce qui augmente la taille de l'appareil alimenté. Leur montage est en outre long, laborieux et dangereux, ce qui augmente leur coût. Le montage des unités de stockage est une opération délicate car ces unités sont généralement vissées ou soudées sous tension sur le bus de puissance, ce qui demande des outils adaptés et des temps d'assemblage conséquents. En outre, un court-circuit accidentel lors du montage peut être extrêmement grave pour l'opérateur. Le montage nécessite donc des précautions très importantes ainsi que des habilitations spécifiques.

Afin de simplifier le montage d'une batterie, il est connu du document CN 203746956 U, un système de connexion de batterie comprenant un élément magnétique présentant une première configuration et une deuxième configuration. Dans la première configuration, l'attraction induite par l'élément magnétique entraîne une mise en contact de connecteurs électriques et ainsi le raccordement de la batterie. Dans la deuxième configuration, l'élément magnétique n'induit pas d'attraction magnétique dans le système, et la batterie n'est pas raccordée électriquement. Ce système reste néanmoins perfectible en termes de simplification de montage et peu modulaire.

Le document FR 3 085 798 A1 divulgue un dispositif de connexion et déconnexion entre un accumulateur et une barre de connexion électrique (communément désignée busbar), comprenant un adaptateur d'interface comprenant un verrou magnétique et une pièce ferromagnétique formant un circuit magnétique avec le verrou magnétique pour connecter électriquement et mécaniquement l'unité de stockage au busbar dans une première configuration. Dans une deuxième configuration, le verrou magnétique n'induit pas d'attraction magnétique dans le système, et l'unité de stockage n'est pas raccordée électriquement.

Le document US 2012/0031708 A1 décrit un verrou magnétique bistable pour verrouiller le couvercle d'une base d'une unité de contrôle d'un ascenseur.

Le document EP 3 567 650 A1 décrit un pack batterie pouvant être couplé à d'autres packs batterie par un système de connexion mécanique par des reliefs complémentaires ou des vis.

Un objet de la présente invention est donc de proposer une solution visant à faciliter le montage et la connexion, et/ou la déconnexion et le démontage d'une unité de stockage électrique.

Les autres objets, caractéristiques et avantages de la présente invention apparaîtront à l'examen de la description suivante et des dessins d'accompagnement. Il est entendu que d'autres avantages peuvent être incorporés.

### RÉSUMÉ

Pour atteindre cet objectif, selon un premier aspect on prévoit un système de connexion d'au moins une unité de stockage d'énergie électrique, pour un dispositif d'alimentation électrique, le système comprenant :
- au moins un premier module de connexion magnétique apte à être solidarisé à l'unité de stockage, et configuré pour coopérer avec un deuxième module de connexion magnétique et former un verrou magnétique présentant une première configuration dans laquelle le premier module et le deuxième module sont attirés magnétiquement l'un à l'autre, de façon à immobiliser l'unité de stockage dans une première position,
- des connecteurs électriques configurés pour raccorder électriquement l'unité de stockage au dispositif d'alimentation, dans sa première position.

Avantageusement, le verrou magnétique présente une deuxième configuration dans laquelle le premier module et le deuxième module sont attirés magnétiquement l'un à l'autre, de façon à immobiliser l'unité de stockage dans une deuxième position différente de la première position.

Ainsi, le premier module, en coopération avec le deuxième module, forme un verrou magnétique bistable. L'unité de stockage peut donc être immobilisée dans deux positions distinctes et déterminées. L'unité de stockage peut être mise dans une position lors du montage, par exemple pour faire un pré-alignement des unités de stockage, puis basculée dans l'autre position dans laquelle l'unité de stockage est raccordée électriquement au dispositif d'alimentation. Lors d'un démontage de l'unité de stockage, l'unité de stockage peut être basculée de sa position de raccordement électrique au dispositif d'alimentation à sa deuxième position, notamment faciliter une opération de maintenance de l'unité de stockage. Le verrou magnétique bistable minimise, voire évite, le recours à des supports pour guider l'unité de stockage lors du montage et du démontage d'un ensemble d'alimentation ou d'un dispositif d'alimentation. Le montage et la connexion de l'unité de stockage, et/ou sa déconnexion et son démontage, et du dispositif d'alimentation la comprenant, sont donc facilités par rapport aux solutions existantes. L'architecture de l'ensemble d'alimentation ou du dispositif est en outre simplifiée par rapport aux solutions existantes.

Selon un exemple, dans la deuxième position, l'unité de stockage n'est pas raccordée électriquement au dispositif d'alimentation. Ainsi, le montage et la connexion, et/ou sa déconnexion et son démontage, de l'unité de stockage sont encore facilités et sécurisés, en permettant un placement précis hors courant de l'unité de stockage, et un basculement dans sa première position dans laquelle l'unité est raccordée électriquement au dispositif.

Le système peut comprendre une paroi configurée pour former un pourtour au moins partiel de l'unité de stockage, et pour recevoir le premier module de connexion magnétique. La paroi peut plus particulièrement former un godet ou une gaine de l'unité de stockage. Ainsi, le système de connexion peut être assimilé à une gaine ou un godet fonctionnalisé par un premier module de connexion magnétique pour former un verrou magnétique bistable. La gaine ou le godet de l'unité de stockage permet ainsi l'immobilisation de l'unité de stockage contenue par la gaine ou le godet, dans deux positions distinctes et déterminées pour faciliter son montage et sa connexion. Selon un exemple, l'au moins une première paire de connecteurs électriques est en outre montée sur la paroi.

Un deuxième aspect concerne une unité de stockage d'énergie électrique comprenant le système de connexion selon le premier aspect.

Selon un exemple le système de connexion comprend une paroi formant un godet de l'unité de stockage. Selon un exemple alternatif, le système de connexion peut comprendre une paroi formant une gaine de l'unité de stockage. La paroi peut comprendre des éléments de fixation de la paroi sur l'unité de stockage, de façon à être montée amovible sur l'unité de stockage.

Un troisième aspect concerne un ensemble d'alimentation électrique comprenant plusieurs unités de stockage, au moins une, et de préférence plusieurs, unité de stockage étant une unité de stockage selon le deuxième aspect.

Chaque unité de stockage de l'ensemble peut comprendre le système de connexion. Les systèmes de connexion d'au moins une partie des unités de stockage peuvent comprendre au moins deux modules de connexion magnétiques de façon à former des verrous magnétiques immobilisant entre elles lesdites unités dans l'une et l'autre de leur première et deuxième positions. Les unités de stockage peuvent ainsi être immobilisées entre elles par attraction magnétique de façon à former l'ensemble, sans nécessiter de support additionnel. Le montage de l'ensemble est ainsi facilité, et son encombrement est réduit.

Un quatrième aspect concerne un dispositif d'alimentation électrique comprenant au moins une unité de stockage selon le deuxième aspect, et/ou au moins un ensemble d'alimentation selon le troisième aspect, et un support configuré pour recevoir l'au moins une unité de stockage et/ou l'au moins un ensemble d'alimentation. Le support peut comprendre au moins un deuxième module de connexion magnétique configuré pour coopérer avec le premier module de connexion magnétique d'un système de connexion.

Un cinquième aspect concerne un appareil comprenant au moins un dispositif d'alimentation électrique selon le quatrième aspect, et/ou au moins un ensemble d'alimentation selon le troisième aspect, et/ou au moins une unité de stockage selon le deuxième aspect.

### BRÈVE DESCRIPTION DES FIGURES

Les buts, objets, ainsi que les caractéristiques et avantages de l'invention ressortiront mieux de la description détaillée d'exemples de réalisation de cette dernière, illustrés par les dessins d'accompagnement suivants dans lesquels :
Les figures 1A à 1C représentent les configurations du verrou magnétique, selon un exemple de réalisation.
Les figures 1D à 1E représentent un verrou magnétique, selon d'autres exemples de réalisation.
Les figures 2A et 2B représentent des vues en coupe longitudinale et frontale d'une unité de stockage comprenant un système de connexion pour former un verrou magnétique, selon deux exemples de réalisation.
Les figures 3A et 3B représentent un ensemble d'alimentation comprenant deux unités de stockage raccordée par leur système de connexion formant un verrou magnétique selon deux exemples de réalisation, les unités de stockage étant connectées respectivement en parallèle et en série.
La figure 4 représente une vue en coupe longitudinale d'un ensemble d'alimentation comprenant deux unités de stockage, chaque unité de stockage comprenant un système de connexion pour former un verrou magnétique, selon un autre exemple de réalisation.
Les figures 5A à 5C représentent différents modes de réalisation du système de connexion illustré en figure 4.
Les figures 6A et 6B représentent des vues d'ensemble du système de connexion illustré en figure 4.
Les figures 7A à 8B représentent des vues d'une unité de stockage comprenant un système de connexion pour former un verrou magnétique et permettant un raccordement en série et/ou en parallèle, selon un exemple de réalisation.
Les figures 9 à 11B représentent un dispositif d'alimentation, selon un exemple de réalisation.
Les figures 12 et 13 représentent un ensemble d'alimentation comprenant plusieurs unités de stockage, les unités de stockage comprenant un système de connexion permettant une mise en continuité électrique, selon un exemple de réalisation.
Les figures 14A à 15B représentent schématiquement différents exemples de tracé des connecteurs pour la mise en continuité électrique illustrée par les figures 12 et 13.
Les figures 16A et 16B représentent un ensemble d'alimentation comprenant plusieurs unités de stockage raccordées en parallèle, les unités de stockage comprenant un système de connexion permettant une mise en continuité électrique, selon un exemple de réalisation.
Les figures 17A et 17B représentent un ensemble d'alimentation comprenant plusieurs unités de stockage raccordées en série, les unités de stockage comprenant un système de connexion permettant une mise en continuité électrique, selon un exemple de réalisation.
Les figures 18A à 18F représentent des vues d'une unité de stockage comprenant un système de connexion permettant une mise en continuité électrique et un raccordement en série et en parallèle, selon un exemple de réalisation.
Les figures 19A à 19E représentent des éléments de fixation du système de connexion à une unité de stockage, selon plusieurs exemples de réalisation.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les dimensions relatives du système de connexion, de l'unité de stockage, de l'ensemble d'alimentation, du dispositif d'alimentation et de l'appareil ne sont pas représentatives de la réalité.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
- le passage de l'une parmi la première configuration et la deuxième configuration du verrou magnétique, à l'une parmi la première configuration et la deuxième configuration est induit par un exercice d'une force s'exerçant sur le système de connexion de façon à induire un déplacement relatif en translation du premier module et du deuxième module,
- le premier module et le deuxième module sont mobiles l'un par rapport à l'autre entre la première configuration et la deuxième configuration sous l'exercice d'une force s'exerçant sur le système de connexion,
- le premier module est configuré pour coopérer avec le deuxième module de façon à former un circuit magnétique à reluctance faible dans chacune des première et deuxième configurations. La précision de l'immobilisation de l'unité de stockage dans chacune de ses positions est ainsi maximisée,
- le verrou magnétique présente en outre au moins une troisième configuration dans laquelle le premier module est configuré pour coopérer avec un deuxième module de façon à former un circuit magnétique à reluctance élevée,
- le premier module est configuré pour coopérer avec le deuxième module de sorte que le verrou magnétique présente au moins une configuration intermédiaire entre la première configuration et la deuxième configuration, le verrou magnétique formant, dans la configuration intermédiaire, un circuit magnétique de reluctance supérieure à une reluctance d'un circuit magnétique formé dans chacune des première et deuxième configurations. L'immobilisation de l'unité de stockage par défaut dans la première ou la deuxième position est ainsi assurée,
- pour chacune des au moins une configuration intermédiaire, le verrou magnétique forme un circuit magnétique de sorte que le premier module et le deuxième module sont attirés magnétiquement l'un à l'autre. Ainsi, le premier module et le deuxième module sont attirés magnétiquement l'un à l'autre quelle que soit la configuration du verrou,
- le premier module comprend l'un parmi :
   - un premier organe de conduite d'un champ magnétique à base d'un matériau ferromagnétique doux, et
   - un deuxième organe de conduite d'un champ magnétique à base d'un matériau ferromagnétique doux, comprenant trois reliefs séparés successivement par un entrefer selon une direction de déplacement relatif entre le premier module et le deuxième module,
   - le premier organe de conduite ou le deuxième organe comprenant au moins un aimant,
- le premier module est apte à coopérer avec le deuxième module comprenant l'autre parmi ledit premier organe de conduite et ledit deuxième organe de conduite, de sorte que :
   - dans la première configuration, le premier organe de conduite est au moins partiellement, et de préférence totalement, en regard avec un premier relief et un deuxième relief parmi les trois reliefs du deuxième organe de conduite, le premier organe de conduite, le premier relief ou le deuxième relief comprenant un aimant, et
   - dans la deuxième configuration, le premier organe de conduite est au moins partiellement, et de préférence totalement, en regard avec le deuxième relief et un troisième relief parmi les trois reliefs du deuxième organe de conduite, du deuxième organe de conduite, le premier organe de conduite, le deuxième relief ou le troisième relief comprenant un aimant,
- dans la première configuration, le premier organe de conduite et le deuxième organe de conduite forment un circuit magnétique comprenant le premier organe de conduite, le premier relief et le deuxième relief parmi les trois reliefs du deuxième organe de conduite, le premier organe de conduite, le premier relief ou le deuxième relief comprenant un aimant,
- dans la deuxième configuration, le premier organe de conduite et le deuxième organe de conduite forment un circuit magnétique comprenant le premier organe de conduite, le deuxième relief et le troisième relief parmi les trois reliefs du deuxième organe de conduite, le premier organe de conduite, le deuxième relief ou le troisième relief comprenant un aimant,
- selon un exemple, les trois reliefs du deuxième organe de conduite sont séparés par un matériau non conducteur magnétiquement, par exemple un matériau non ferromagnétique, comme l'air ambiant ou un isolant électrique solide comme par exemple du plastique, pour former les entrefers,
- le premier module comprend l'un parmi :
   - un premier organe de conduite d'un champ magnétique, de préférence à base d'un matériau ferromagnétique doux, et
   - un deuxième organe de conduite d'un champ magnétique, présentant une cavité dans laquelle un aimant permanent est logé, le deuxième organe de conduite d'un champ magnétique étant de préférence à base d'un matériau ferromagnétique doux,
- le premier module est apte à coopérer avec le deuxième module comprenant l'autre parmi :
   - un premier organe de conduite du champ magnétique, de préférence à base ou fait d'un matériau ferromagnétique doux, et
   - un deuxième organe de conduite du champ magnétique présentant une cavité dans laquelle un aimant permanent est logé, le deuxième organe de conduite du champ magnétique étant de préférence à base ou fait d'un matériau ferromagnétique doux,
      de sorte que le premier organe de conduite est au moins partiellement, et de préférence totalement, en regard avec l'aimant permanent et une première bordure de la cavité du deuxième organe de conduite, dans la première configuration, et le premier organe de conduite est au moins partiellement en regard, et de préférence totalement, avec l'aimant permanent et une deuxième bordure de la cavité du deuxième organe de conduite, dans la deuxième configuration.
- le premier module comprend l'un parmi :
   - un premier organe de conduite du champ magnétique, de préférence à base ou fait d'un matériau ferromagnétique doux, et
   - un deuxième organe de conduite du champ magnétique comprenant une cavité comprenant un relief et au moins deux aimants disposés de part et d'autre de la cavité, le deuxième organe de conduite du champ magnétique étant de préférence à base ou fait d'un matériau ferromagnétique doux,
- le premier module est apte à coopérer avec le deuxième module comprenant l'autre parmi ledit premier organe de conduite du champ magnétique et ledit deuxième organe de conduite du champ magnétique,
   de sorte que le premier organe de conduite est au moins partiellement, et de préférence totalement, en regard avec un aimant et le relief de la cavité, dans la première configuration, et le premier organe de conduite est au moins partiellement en regard, et de préférence totalement, avec un autre aimant et le relief de la cavité, dans la deuxième configuration.
- le premier module comprend l'un parmi :
   - un premier organe de conduite d'un champ magnétique, de préférence à base d'un matériau ferromagnétique doux, comprenant au moins deux aimants,
   - un deuxième organe de conduite d'un champ magnétique, présentant une cavité délimitée par des bordures et dans laquelle un relief est logé, le deuxième organe de conduite d'un champ magnétique étant de préférence à base d'un matériau ferromagnétique doux,
- le premier module est apte à coopérer avec le deuxième module comprenant l'autre parmi ledit premier organe de conduite du champ magnétique et ledit deuxième organe de conduite du champ magnétique,
   de sorte que un premier aimant du premier organe de conduite est au moins partiellement, et de préférence totalement, en regard avec le relief de la cavité du deuxième organe de conduite et un deuxième aimant du premier organe de conduite est au moins partiellement, et de préférence totalement, en regard avec une première bordure de la cavité du deuxième organe de conduite, dans la première configuration, et le premier aimant du premier organe de conduite est au moins partiellement, et de préférence totalement, en regard avec une deuxième bordure de la cavité du deuxième organe de conduite et le deuxième aimant du premier organe de conduite est au moins partiellement, et de préférence totalement, en regard avec le relief de la cavité du deuxième organe de conduite, dans la deuxième configuration.
- le premier organe de conduite d'un champ magnétique est à base d'un matériau ferromagnétique doux, et le deuxième organe de conduite d'un champ magnétique est à base d'un matériau ferromagnétique doux. Grâce à l'utilisation d'un matériau ferromagnétique doux, une bonne réactivité du verrou magnétique est assurée,
- le système de connexion est apte à former au moins un verrou magnétique additionnel en comprenant au moins un parmi un premier module et un deuxième module de connexion magnétique. L'ajout de modules de connexion additionnels permet d'améliorer encore l'immobilisation de l'unité de stockage,
- le système comprend au moins une paire de connecteurs électriques configurée pour raccorder électriquement en parallèle ou en série l'unité de stockage au dispositif d'alimentation, dans sa première position,
- le système comprend :
   - une première paire de connecteurs électriques disposée selon un premier plan et configurée pour raccorder électriquement en parallèle l'unité de stockage au dispositif d'alimentation, dans sa première position,
   - une deuxième paire de connecteurs électriques disposée selon un deuxième plan et configurée pour raccorder électriquement en série l'unité de stockage au dispositif d'alimentation, dans sa première position, le premier plan et le deuxième étant distincts, et de préférence perpendiculaires, et
   - l'un parmi un premier module de connexion magnétique et un deuxième module de connexion magnétique additionnel, le premier module de connexion magnétique et le module de connexion magnétique additionnel étant disposés de façon à chacun coopérer avec un module de connexion magnétique complémentaire, et former un verrou magnétique distinct pour chacune des première et deuxième paires de connecteurs. Le système de connexion est ainsi rendu plus modulaire en permettant à la fois un raccordement en série ou en parallèle de l'unité de stockage.

Dans la suite de la description, le terme « sur » ne signifie pas nécessairement « directement sur ». Ainsi, lorsque l'on indique qu'une pièce ou qu'un organe A est en appui « sur » une pièce ou un organe B, cela ne signifie pas que les pièces ou organes A et B soient nécessairement en contact direct avec l'autre. Ces pièces ou organes A et B peuvent être soit en contact direct soit être en appui l'une sur l'autre par l'intermédiaire d'une ou plusieurs autres pièces. Il en est de même pour d'autres expressions telle que par exemple l'expression « A agit sur B » qui peut signifier « A agit directement sur B » ou « A agit sur B par l'intermédiaire d'une ou plusieurs autres pièces». L'expression « A est raccordée électriquement avec B »ou « A est mis en continuité électrique avec B » signifie que A et B sont reliés électriquement, A pouvant être directement raccordée sur B ou bien indirectement par le biais d'un autre élément, par exemple via un fusible ou un interrupteur.

Le terme mobile correspond à un mouvement de rotation ou à un mouvement de translation ou encore à une combinaison de mouvements, par exemple la combinaison d'une rotation et d'une translation.

Le terme « solidaire » utilisé pour qualifier la liaison entre deux pièces signifie que les deux pièces sont liées/fixées l'une par rapport à l'autre, selon au moins un degré de liberté. Par exemple, s'il est indiqué que deux pièces sont solidaires en translation selon une direction Y, cela signifie que les pièces peuvent être mobiles l'une par rapport à l'autre, possiblement selon plusieurs degrés de liberté, à l'exclusion de la liberté en translation selon la direction Y. Autrement dit, si on déplace une pièce selon la direction Y, l'autre pièce effectue le même déplacement.

On entend par un actionneur ou un élément « thermosensible », un actionneur ou un élément dont les propriétés peuvent être modifiées sensiblement autour d'une température seuil. Plus particulièrement, la forme de l'actionneur ou de l'élément peut être modifiée autour de la température seuil.

On entend par un élément « à base » d'un matériau A, un élément comprenant ce matériau A uniquement ou ce matériau A et éventuellement d'autres matériaux.

On entend par un paramètre « sensiblement égal/supérieur/inférieur à » une valeur donnée, que ce paramètre est égal/supérieur/inférieur à la valeur donnée, à plus ou moins 10 % près, voire à plus ou moins 5 % près, de cette valeur.

Dans la suite, l'épaisseur d'un élément ainsi que les profondeurs sont généralement mesurées selon une direction perpendiculaire au plan d'extension principale de l'élément, par exemple de façon perpendiculaire à sa surface.

Dans la description détaillée qui suit, il pourra être fait usage de termes tels que « longitudinal », « transversal », « avant », « arrière », « intérieur », « extérieur ». Ces termes doivent être interprétés de façon relative en relation avec la position relative des composants du dispositif d'alimentation. La direction « longitudinale » peut notamment correspondre à la direction d'extension principale de l'unité de stockage.

«Interne » désigne les éléments ou les faces tournées vers l'intérieur d'un système, d'une unité, d'un ensemble d'alimentation ou d'un dispositif, et «externe » désigne les éléments ou les faces tournées vers l'extérieur d'un système, d'une unité, d'un ensemble d'alimentation ou d'un dispositif. Selon un exemple, l'unité de stockage présentant un axe central A, « interne » désigne les éléments ou les faces tournées vers cet axe, et «externe » désigne les éléments ou les faces tournées à l'opposé de cet axe central.

On utilisera également un repère dont la direction longitudinale ou bas/haut correspond à l'axe z, la direction transversale correspond à l'axe y, et la direction frontale ou avant/arrière correspond à l'axe x.

Comme énoncé précédemment, les unités de stockage 2 d'énergie électrique forment des briques élémentaires de stockage électrique. Ces unités peuvent être connectées en parallèle et ou en série pour constituer un ensemble d'alimentation 3, communément appelé module de batterie, et/ou un pack-batterie, de tension et/ou de capacité plus importante. Les unités de stockage 2 peuvent être comprises dans un dispositif d'alimentation 4, destiné à alimenter un appareil 5. L'appareil 5 peut être issu de tout domaine d'application, tel que des appareils mobiles ou stationnaires, des appareils pour des applications de transport, par exemple comprenant un moteur. Plus particulièrement, l'appareil 5 peut être configuré pour être alimenté électriquement par une batterie lithium-ion.

Dans les solutions existantes, les unités de stockage 2 sont raccordées électriquement entre elles et/ou au dispositif d'alimentation 4 d'un appareil 5 grâce à un bus de puissance 400. Un bus de puissance consiste généralement en un jeu de barres ou en des pistes conductrices sur un circuit imprimé, par exemple en cuivre. Le bus de puissance 400 assure notamment la liaison électrique entre les unités de stockage dans le dispositif d'alimentation 4. Les pôles 20, 21 des unités de stockage 2 sont habituellement vissées ou soudées une à une sur le bus de puissance 400, induisant un montage long et une architecture complexe.

Afin de simplifier le montage et la connexion, et/ou le démontage et la déconnexion, des unités de stockage 2, le premier aspect de l'invention concerne un système de connexion 1 d'au moins une unité de stockage 2. Dans la suite, on se réfère à l'exemple non-limitatif où le système de connexion 1 coopère avec une seule unité de stockage 2. Notons qu'on peut prévoir que le système de connexion 1 soit adapté pour plusieurs, par exemple deux unités de stockage 2, voire pour un ensemble d'alimentation 3.

Le système de connexion 1 comprend un premier module 100 de connexion magnétique configuré pour coopérer avec un deuxième module 101 de connexion magnétique, et former un verrou magnétique 10. Le premier module 100 est en outre apte à être solidarisé de l'unité de stockage 2. Comme décrit plus en détail ultérieurement, le deuxième module 101 peut appartenir à un système de connexion 1 distinct ou à un support 40 d'un dispositif d'alimentation 4.

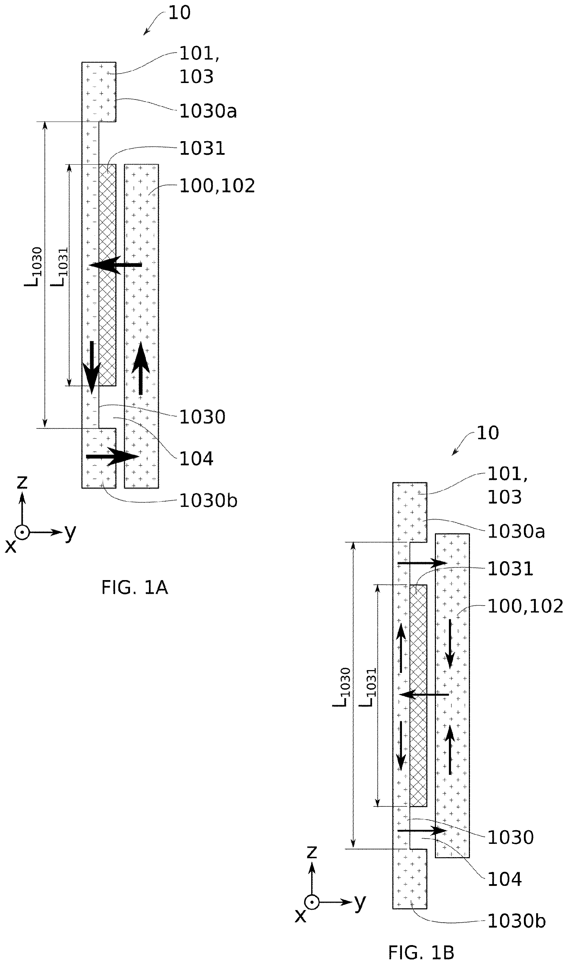

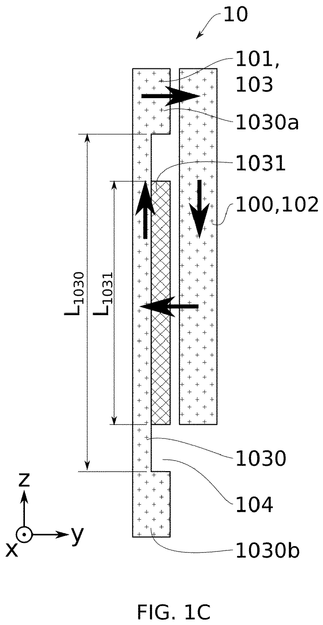

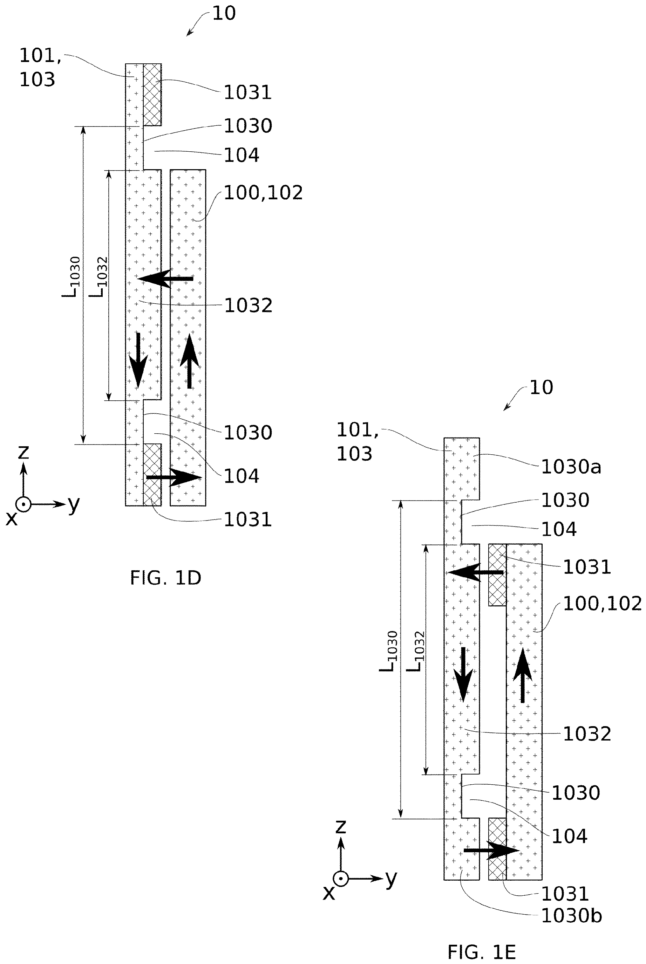

Comme l'illustre la figure 1A ou encore les figures 1D et 1E, le verrou magnétique 10 présente une première configuration dans laquelle le premier module 100 et le deuxième module 101 sont attirés magnétiquement l'un à l'autre. Le premier module 100 est apte à être solidarisé de l'unité de stockage 2. Dans la première configuration, l'unité de stockage 2 est ainsi immobilisée dans une première position. Comme l'illustre la figure 1C, le verrou magnétique 10 présente une deuxième configuration dans laquelle le premier module 100 et le deuxième module 101 sont aussi attirés magnétiquement l'un à l'autre. Les positions relatives du premier module 100 et du deuxième module 101 sont différentes entre la première et la deuxième configuration. Le premier module 100 étant apte à être solidarisé à l'unité de stockage 2, l'unité de stockage 2 peut être immobilisée dans une deuxième position, distincte de la première position. Le verrou magnétique 10 peut ainsi être assimilé à un verrou magnétique bistable permettant de déplacer l'unité de stockage 2 relativement à une autre unité de stockage 2 et/ou à un support 40 d'un dispositif d'alimentation 4, entre deux positions déterminées par le verrou magnétique 10.

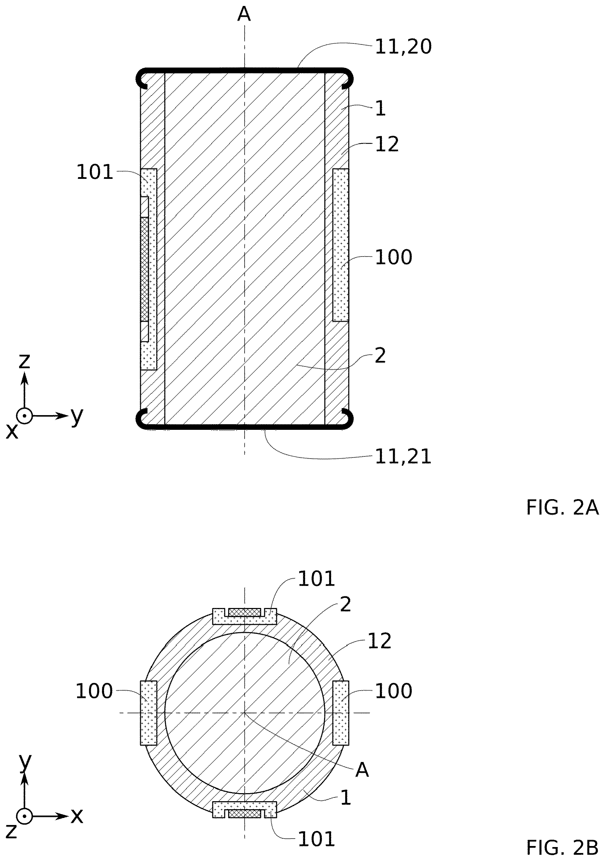

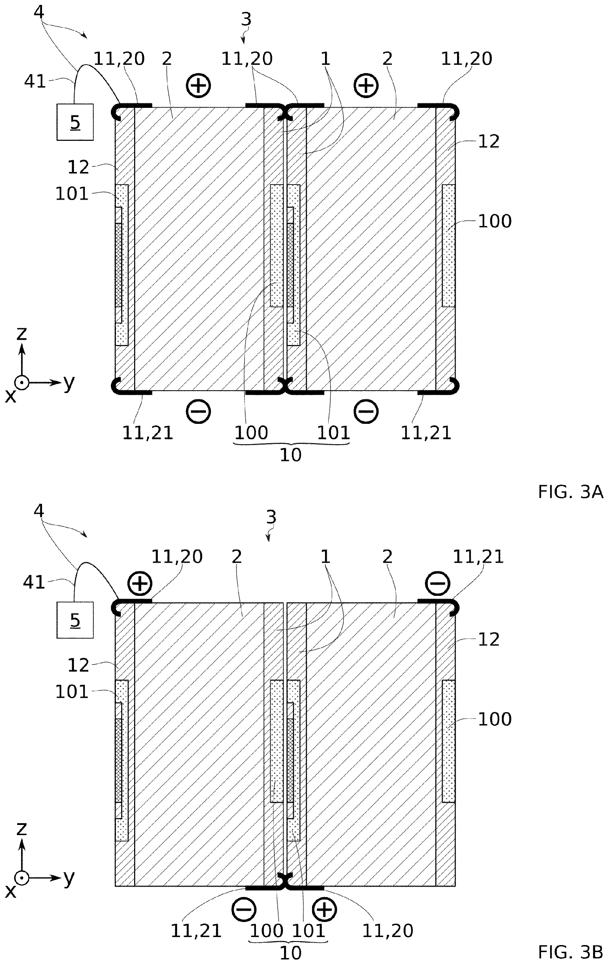

Le système de connexion 1 comprend en outre des connecteurs électriques 11 configurés pour raccorder électriquement les pôles positif 20 et négatif 21 de l'unité de stockage 2 au dispositif d'alimentation 4, au moins dans la première position de l'unité de stockage 2. Ce raccordement peut par exemple être via des systèmes de connexion 1 d'autres unités de stockage 2, et/ou via un circuit d'alimentation 41 du dispositif d'alimentation 4, comme par exemple illustré dans les figures 3A et 3B. Par exemple, selon l'exemple où l'unité de stockage présente un pôle positif 20 à une première extrémité, et un pôle négatif à une deuxième extrémité 21, un connecteur 11 peut être en contact avec un pôle 20, 21 et s'étendre sensiblement perpendiculairement à l'axe A reliant les deux pôles de l'unité de stockage 2, comme illustré par la figure 2A, pour être raccordé à un connecteur 11 d'un autre système de connexion où au support 40. Dans la première configuration du verrou magnétique 10, l'attraction magnétique peut assurer une pression de contact des connecteurs 11, et assurer leur raccordement électrique. Les connecteurs 11 peuvent comprendre un contact électrique au niveau duquel le contact électrique est réalisé avec l'élément électrique à raccorder.

De façon synergique entre les connecteurs 11 et le premier module 100 de connexion, le système de connexion 1 permet d'assembler magnétiquement et électriquement des unités de stockage 2 entre elles et/ou au dispositif d'alimentation 4, et ainsi simplifier le montage d'un dispositif d'alimentation 4. Grâce à la formation d'un verrou magnétique 10 bistable, l'unité de stockage 2 est mobile entre ses deux positions, de façon à faciliter son montage. En outre, l'unité de stockage 2 peut être déplacée en cas de défaillance, afin de limiter la propagation de cette défaillance dans le dispositif d'alimentation 4. Ceci est décrit plus en détail ultérieurement.

De préférence, les connecteurs électriques 11 sont configurés pour ne pas raccorder électriquement l'unité de stockage 2 au dispositif d'alimentation 4 lorsque l'unité de stockage 2 est dans la deuxième position, au moins par le biais d'un de ses pôles. En effet, il suffit qu'un des pôles de l'unité de stockage 2 soit déconnecté électriquement du circuit d'alimentation 41 pour que l'unité de stockage 2 soit déconnectée électriquement. Ainsi, le montage et la connexion de l'unité de stockage est encore facilité et sécurisé, en permettant un placement précis hors courant de l'unité de stockage, puis un basculement dans sa première position dans laquelle l'unité est raccordée électriquement au dispositif d'alimentation 4. En outre, l'unité de stockage 2 peut être déconnectée électriquement en cas de défaillance, afin de limiter encore la propagation de cette défaillance.

Le système de connexion 1 peut en outre comprendre une paroi 12 configurée pour former un pourtour au moins partiel de l'unité de stockage 2. La paroi 12 peut entourer latéralement l'unité de stockage 2 selon les directions x et y, comme illustré en figure 2A. La paroi 12 peut plus particulièrement former un godet ou une gaine de l'unité de stockage 2. Un godet désigne une enveloppe contenant, de préférence directement, le ou les matériaux réactifs d'une unité de stockage 2. Un godet peut être soumis à un potentiel électrique de l'unité de stockage, par exemple le godet est à base ou fait d'un matériau métallique. Une gaine est une enveloppe configurée de façon à entourer au moins une unité de stockage 2, généralement de façon additionnelle au godet, pour protéger l'unité de stockage 2 d'éventuels chocs extérieurs. Selon un exemple, une gaine peut entourer plusieurs unités de stockage 2. La gaine peut en outre être configurée pour isoler électriquement l'unité de stockage 2, et plus particulièrement le godet, de son environnement. La paroi 12 peut recevoir le ou les modules 100, 101 de connexion magnétiques, et de préférence en outre les connecteurs 11. Ainsi, le système de connexion 1 peut constituer une gaine ou un godet fonctionnalisé pour l'assemblage et le raccordement d'une ou de plusieurs unités de stockage 2, en minimisant le recours à un bus de puissance externe et/ou des moyens d'assemblage additionnels.

Le principe de fonctionnement du verrou magnétique est tout d'abord décrit en référence aux figures 1A à 1C, 1D et 1E. Comme illustré par les figures 1A et 1C, et 1D et 1E, le verrou magnétique 10 comprend un premier module 100 et un deuxième module 101 configuré ensemble pour former un circuit magnétique de faible reluctance dans les première et deuxième configurations. Dans la première configuration et la deuxième configuration, le premier module 100 et le deuxième module 101 peuvent être en continuité magnétique. Un circuit magnétique de réluctance faible permet, pour une valeur de champ magnétique donnée, de générer un flux magnétique important et donc une force d'attraction importante. La précision de l'immobilisation de l'unité de stockage 2 dans chacune de ses positions, est ainsi maximisée. Dans les première et deuxième configurations, la reluctance du circuit permet la génération d'une force d'attraction suffisante pour maintenir ensemble le premier module 100 et le deuxième module 101. À titre d'exemple, la reluctance peut être sensiblement égale à 1.10⁸ H⁻¹ (unité : Henry) pour une induction de 0,3 T (unité : Tesla) et un effort généré de sensiblement 10 à 15 N (unité Newton).

La réluctance magnétique peut être sensiblement égale dans la première configuration et dans la deuxième configuration. L'une parmi la première et la deuxième configuration peut présenter une reluctance magnétique supérieure à l'autre parmi la première et la deuxième configuration. Le basculement de la configuration de reluctance supérieure vers la configuration de reluctance inférieure est ainsi facilité.

Pour cela, selon un exemple, le premier module 100 comprend :
- un organe de conduite 102, 103 d'un champ magnétique à base ou fait d'au moins un matériau magnétiquement conducteur, ou
- un autre organe de conduite 102, 103 d'un champ magnétique à base ou fait d'au moins un matériau magnétiquement conducteur, comprenant au moins un aimant,
- les deux organes de conduite formant, dans la première configuration, un premier circuit magnétique, et dans la deuxième configuration, un deuxième circuit magnétique différent du premier circuit.

Le deuxième organe de conduite de champ 103 peut présenter trois reliefs à base ou fait d'au moins un matériau magnétiquement conducteur et alignés selon la directement de déplacement relatif du premier module et du deuxième module, par exemple la direction z. Les reliefs peuvent être successivement séparés par un entrefer 104. Le premier organe de conduite de champ 102 peut être configuré pour être en regard avec deux des trois reliefs pris successivement selon cette direction, dans la première configuration. Le premier organe de conduite de champ 102 peut être configuré pour être en regard avec deux autres des trois reliefs pris successivement selon cette direction, dans la deuxième configuration. On comprend donc que deux circuits magnétiques différents peuvent être formés entre les première et deuxième configurations.

Pour cela, selon un exemple, le premier module 100 comprend :
- un premier organe de conduite 102 d'un champ magnétique à base ou fait d'au moins un matériau magnétiquement conducteur, ou
- un deuxième organe de conduite 103 d'un champ magnétique à base ou fait d'au moins un matériau magnétiquement conducteur, présentant une cavité dans laquelle un aimant 1031 est logé et/ou comprenant des aimants placés de part et d'autre de la cavité.

Selon que le premier module comprenne l'un ou l'autre des premier et deuxième organes de conduite 102, 103, le deuxième module 101 comprend l'organe de conduite complémentaire.

Selon l'exemple illustré par les figures 1A à 1C, le deuxième organe de conduite 103 peut comprendre une cavité 1030 configurée pour accueillir au moins en partie un aimant 1031. L'aimant 1031 peut être un électroaimant. De préférence, l'aimant 1031 est un aimant permanent de sorte que le verrou magnétique 10 est passif et donc fonctionne sans apport extérieur d'énergie.

Dans la première configuration, par exemple illustrée par la figure 1A, le verrou magnétique 10 est configuré de sorte que le premier organe de conduite 102 est au moins en partie, et de préférence totalement, en regard avec l'aimant permanent 1031 et une bordure 1030b de la cavité 1030 du deuxième organe 103. Dans la deuxième configuration, par exemple illustrée par la figure 1C, le verrou magnétique 10 est configuré de sorte que le premier organe de conduite 102 est au moins en partie, et de préférence totalement, en regard avec l'aimant permanent 1031 et une bordure 1030a de la cavité 1030. Plus particulièrement, le premier organe de conduite 102 peut s'étendre au moins entre l'aimant permanent 1031 et l'une ou l'autre bordure 1030a, 1030b de la cavité 1030, selon la configuration du verrou 10. Ainsi, un circuit magnétique peut être créé entre l'aimant 1031 et se propage dans le deuxième organe de conduite 103, puis dans le premier organe 102 par le biais de la bordure 1030a, 1030b, pour atteindre à nouveau l'aimant 1031, comme l'illustre les flèches en figures 1A et 1C.

Selon l'exemple illustré par la figure 1D, le deuxième organe de conduite 103 peut comprendre une cavité 1030, et des aimants 1031 situés de part et d'autres de la cavité 1030, au moins selon la direction du déplacement relatif entre les premier et deuxième organes de conduite, par exemple la direction z. Les aimants 1031 peuvent délimiter la cavité 1030 selon cette direction. La cavité 1030 peut comprendre un relief 1032 à base ou fait d'au moins un matériau magnétiquement conducteur, entouré par logement creux de la cavité. Le relief est ainsi situé entre les aimants 1031.

Dans la première configuration, illustrée par la figure 1D, le verrou magnétique 10 peut être configuré de sorte que le premier organe de conduite 102 est au moins en partie, et de préférence totalement, en regard avec un aimant 1031 et le relief 1032 de la cavité 1030 du deuxième organe 103. Dans la deuxième configuration, non illustrée, le verrou magnétique 10 est configuré de sorte que le premier organe de conduite 102 est au moins en partie, et de préférence totalement, en regard avec l'autre aimant permanent 1031 et le relief 1032 de la cavité 1030. Plus particulièrement, le premier organe de conduite 102 peut s'étendre au moins entre un aimant permanent 1031 et le relief 1032 de la cavité 1030, selon la configuration du verrou 10. Ainsi, un circuit magnétique peut être créé entre un aimant 1031 et se propage dans le premier organe de conduite 102, puis dans le deuxième organe 103 par le biais du relief 1032, pour atteindre à nouveau l'aimant 1031, comme l'illustre les flèches en en figure 1D.

Selon l'exemple illustré par la figure 1E, le deuxième organe de conduite 103 peut comprendre une cavité 1030, et des bordures 1030a et 1030b situés de part et d'autres de la cavité 1030, au moins selon la direction du déplacement relatif entre les premier et deuxième organes de conduite, par exemple la direction z. Les bordures 1030a, 1030b peuvent délimiter la cavité 1030 selon cette direction. La cavité 1030 peut comprendre un relief 1032 à base ou fait d'au moins un matériau magnétiquement conducteur, entouré par logement creux de la cavité. Le relief 1032 est ainsi situé entre les bordures 1030a, 1030b. Le premier organe de conduite 102 peut comprendre des aimants 1031.

Dans la première configuration, illustrée par la figure 1E, le verrou magnétique 10 peut être configuré de sorte que un aimant 1031 du premier organe de conduite 102 est au moins en partie, et de préférence totalement, en regard avec une bordure 1030b du deuxième organe de conduite 103, et un autre aimant 1031 du premier organe de conduite 102 est au moins en partie, et de préférence totalement, en regard avec le relief 1032 de la cavité 1030, ou inversement. Dans la deuxième configuration, non illustrée, le verrou magnétique 10 est configuré de sorte que un aimant 1031 du premier organe de conduite 102 est au moins en partie, et de préférence totalement, en regard avec l'autre bordure 1030a du deuxième organe de conduite 103, et un autre aimant 1031 du premier organe de conduite 102 est au moins en partie, et de préférence totalement, en regard avec le relief 1032 de la cavité 1030, ou inversement. Plus particulièrement, le premier organe de conduite 102, et plus particulièrement le premier organe de conduite 102 pris d'un aimant 1031 à l'autre, peut s'étendre au moins entre une bordure 1030a, 1030b et le relief 1032 de la cavité 1030, selon la configuration du verrou 10. Ainsi, un circuit magnétique peut être créé entre un aimant 1031 et se propage dans le deuxième organe de conduite 103 par l'intermédiaire du relief 1032, jusqu'à une bordure 1030a, 1030b puis dans le premier organe 102 par le biais de l'autre aimant 1031, comme l'illustre les flèches en en figure 1E.

Selon un exemple, le ou les aimants 1031 peuvent être un électroaimant. De préférence, le ou les aimants 1031 sont des aimants permanents de sorte que le verrou magnétique 10 est passif et donc fonctionne sans apport extérieur d'énergie.

Lorsque le verrou 10 comprend plusieurs aimants 1031, les aimants sont disposés de façon à ce que les polarités magnétiques ne changent pas avec le déplacement relatif des premier et deuxième organes de conduite 102, 103. Pour cela, les aimants peuvent être disposés soit sur le premier organe de conduite 102, soit sur le deuxième 103. Les aimants peuvent plus particulièrement être disposés sur un même côté du verrou 10 par rapport au plan de coulissement (x, z) des deux modules 100, 101.

Le passage de la première à la deuxième configuration du verrou magnétique 10 peut être effectué par une rotation, une combinaison de translation et de rotation, et de préférence par une translation, entre les premier 100 et deuxième 101 modules.

Lorsque le flux magnétique est important, la force d'attraction générée est importante. Par exemple, pour décoller ou arracher l'un ou l'autre des modules de connexion 100, 102 suivant la direction y, l'effort nécessaire est important car cela nécessite une variation importante et rapide du flux magnétique circulant dans le circuit magnétique. Le déplacement suivant la direction du déplacement relatif des modules 100, 101 entre la première et la deuxième configuration, par exemple la direction z, nécessite un effort inférieur car la variation du flux magnétique est plus progressive. Par exemple, l'ordre de grandeur entre les efforts à appliquer entre ces deux directions peut être d'un facteur 10.

Le système de connexion 1 peut ainsi permettre une immobilisation efficace de l'unité de stockage 2 dans l'une ou l'autre des première et deuxième positions, tout en assurant une bonne solidité du montage formé par le système de connexion 1.

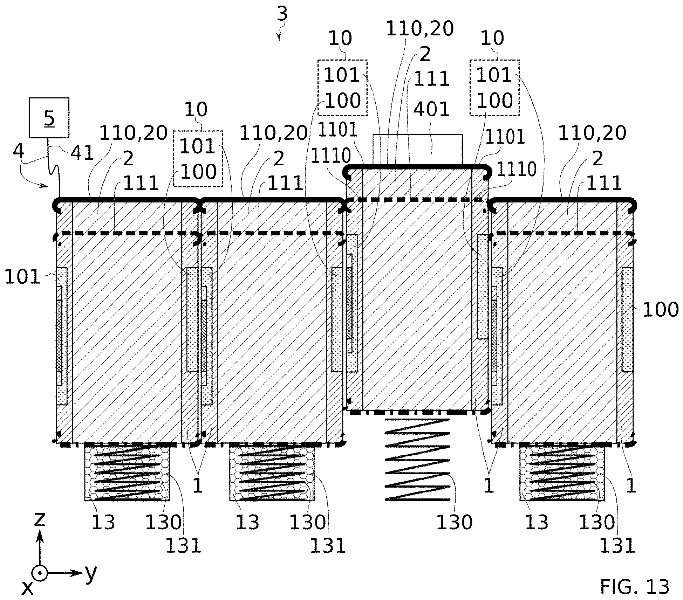

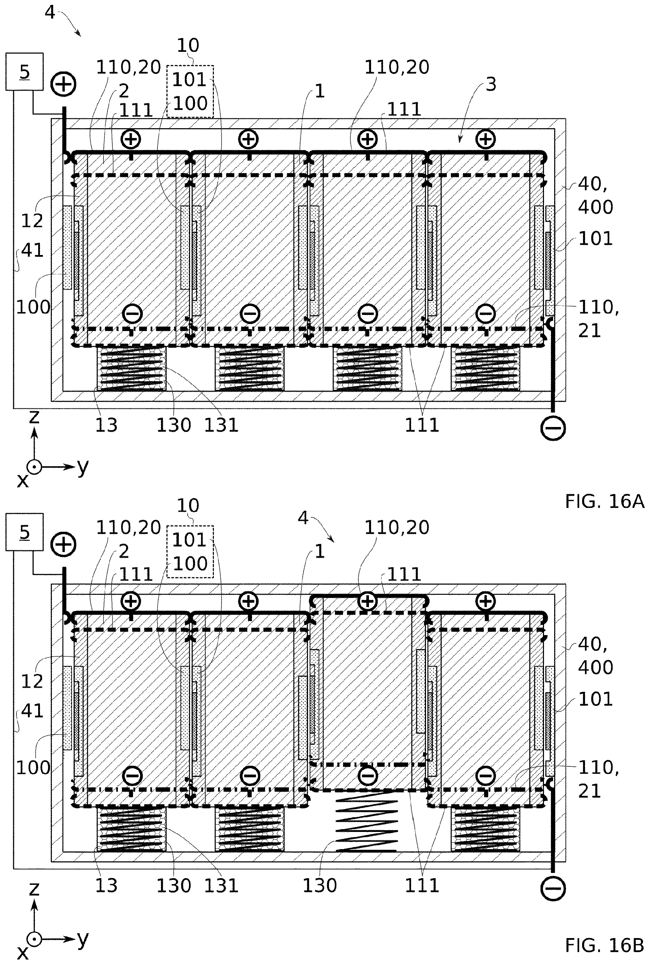

Notons que lorsque plusieurs unités de stockage 2 sont assemblées ensemble par leur système de connexion 1, et notamment lorsqu'au moins une unité de stockage 2 est dans sa deuxième position, par exemple comme illustré dans les figures 13 et 16B, tous les verrous magnétiques 10 ne sont pas nécessairement configurés de sorte que le ou les aimant(s) 1031 sont totalement en regard du premier organe de conduite 102 ou de la bordure 1030a, 1030b ou du relief 1032 du deuxième organe de conduite, par exemple de sorte que le premier organe de conduite 102 est totalement en regard avec l'aimant permanent 1031. Il est possible de décaler le premier ou le deuxième module 100, 101 d'un verrou par rapport au module complémentaire, sans impacter fortement la réluctance du circuit, et donc en gardant une force d'attraction suffisante pour immobiliser de façon suffisamment forte et précise l'unité de stockage 2 dans sa première et sa deuxième position. Plus particulièrement, la première et/ou la deuxième position est alors une position d'équilibre dans laquelle l'effort généré par l'ensemble des verrous magnétiques 10 portés par le système de connexion de l'unité de stockage 2, et de préférence par chaque unité de stockage 2, est maximal. Cette position est notamment déterminée par la géométrie et la construction du système de connexion.

Le verrou magnétique 10 peut présenter en outre au moins une troisième configuration, intermédiaire entre les première et deuxième configurations. Dans la troisième configuration, le premier module 100 est configuré pour coopérer avec le deuxième module 101 de façon à former un circuit magnétique à reluctance élevée, notamment de reluctance supérieure à celle des première et deuxième configurations, de préférence 5 à 10 fois supérieure. Le circuit magnétique de réluctance élevée permet, pour une valeur de champ magnétique donnée, de générer un flux magnétique faible et donc une faible force d'attraction. Cette configuration intermédiaire est plus instable que les deux autres, assurant par défaut l'immobilisation de l'unité de stockage 2 dans la première ou la deuxième position. De préférence, la reluctance du circuit dans la troisième configuration permet la génération d'une force d'attraction suffisante pour maintenir ensemble le premier module 100 et le deuxième module 101, cette force étant inférieure à celle générée dans les configurations stables. La force générée, proportionnelle à la reluctance, dans une configuration instable peut être sensiblement 5 à 10 fois inférieure à la force générée dans une configuration stable. À titre d'exemple, pour une réluctance de 1.10⁸ H⁻¹ dans une configuration stable, on pourrait avoir une reluctance de 5.10⁸ à 10.10⁸ H⁻¹.

De préférence, dans toutes les configurations intermédiaires entre la première et la deuxième configuration, le verrou magnétique 10 est configuré pour maintenir ensemble le premier module 100 et le deuxième module 101. Ceci permet de maintenir la cohésion du verrou magnétique 10, et donc par exemple la cohésion entre les unités de stockage 2 durant le passage de l'une à l'autre des première et deuxième positions. Le verrou magnétique peut être configuré pour présenter un gradient de force d'attraction entre la première et la deuxième configuration, évoluant de façon continue de la première à la deuxième configuration, en passant par l'ensemble des configurations instables, ainsi que dans le sens inverse. Au moins une des configurations instables peut présenter une reluctance 5 à 10 fois supérieure à celle d'une des configurations stables.

Selon un exemple, les trois reliefs du deuxième organe de conduite sont séparés par un matériau non conducteur magnétiquement, par exemple un matériau non ferromagnétique, comme l'air ambiant ou un isolant électrique solide comme par exemple du plastique. De préférence, l'aimant permanent 1031 et chacune des bordures 1030a, 1030b de la cavité 1030 sont séparés par un matériau non conducteur magnétiquement, par exemple un matériau non ferromagnétique, comme l'air ambiant ou un isolant électrique solide comme par exemple du plastique. Selon l'exemple illustré en figure 1D, les aimants 1031 et le relief 1032 de la cavité 1030 sont de préférence séparés par un matériau non conducteur magnétiquement, par exemple un matériau non ferromagnétique, comme l'air ambiant ou un isolant électrique solide comme par exemple du plastique. Selon l'exemple illustré en figure 1E, les bordures 1030a, 1030b et le relief 1032 de la cavité 1030 sont de préférence séparés par un matériau non conducteur magnétiquement, par exemple un matériau non ferromagnétique, comme l'air ambiant ou un isolant électrique solide comme par exemple du plastique. Cette séparation constitue un entrefer 104, ce qui correspond à la partie d'un circuit magnétique où le flux d'induction circule moins que dans le reste du circuit magnétique, et de préférence où le flux ne circule pas. La présence d'un entrefer 104 de part et d'autre de l'aimant permanent 1031 permet de définir deux configurations stables séparées par une configuration moins stable, et de préférence instable. Pour cela, selon la direction du déplacement relatif des premier et deuxième modules 100, 101, la cavité 1030 peut présenter une longueur L₁₀₃₀ supérieure à la longueur L₁₀₃₁ selon cette même direction. Selon un autre exemple, selon la direction du déplacement relatif des premier et deuxième modules 100, 101, la cavité 1030 peut présenter une longueur L₁₀₃₀ supérieure à la longueur L₁₀₃₂ du relief 1032 selon cette même direction. En outre, la longueur du deuxième organe de conduite 102 selon cette direction peut être sensiblement égale et de préférence inférieure à la longueur L₁₀₃₀ de la cavité 1030.

Dans la troisième configuration, le flux magnétique circule par les entrefers 104. La reluctance du circuit magnétique est alors augmentée et l'effort d'attraction généré est réduit par rapport aux première et deuxième configurations, comme l'illustrent les flèches de taille inférieure en figure 1B par rapport aux figures 1A et 1C. De préférence, bien que moindre par rapport aux première et deuxième configurations, l'effort d'attraction tend à maintenir en contact les premier et deuxième modules 100,101. La cohésion du verrou magnétique 10 peut ainsi être permise lors du passage de l'une à l'autre des première et deuxième positions. Le système de connexion 1 cherche donc naturellement à occuper l'une des deux configurations stables et n'est pas susceptible occuper la troisième configuration sans y être contraint. Ainsi, le risque d'un basculement accidentel du verrou 10 de la première configuration à la deuxième configuration est minimisé. Sous l'action d'une force, par exemple générée par un opérateur, le verrou magnétique 10 peut être passé dans sa configuration intermédiaire, puis désolidarisé par exemple selon un mouvement selon l'axe y. Depuis la première configuration et/ou la deuxième configuration, sous l'action de cette force, le verrou magnétique 10 peut en outre être démonté en déplaçant relativement les premier et deuxième modules 100, 101 dans la direction du passage de l'une à l'autre des configurations stables, par exemple selon l'axe z, en dépassant les configurations de stabilité, avant par exemple d'appliquer le force selon y.. Le système de connexion 1 permet ainsi de démonter l'unité de stockage 2.

Le flux magnétique peut dépendre de la nature de l'aimant permanent 1031 et de son induction. L'induction de l'aimant permanent 1031 peut par exemple être sensiblement comprise entre 0,1 Tesla à 1,5 Tesla, par exemple pour un aimant à base d'un alliage néodyme fer bore NdFeB. Par exemple, l'induction d'un plasto-aimant peut sensiblement être égale à 0,3 Tesla. L'induction peut sensiblement être au moins égale à 1,3 Tesla pour un aimant en Alnico, une famille d'alliages ferromagnétiques à base d'aluminium (AI), de nickel (Ni) et de cobalt (Co). Le flux magnétique peut dépendre de la réluctance du circuit magnétique. Dans les configurations stables, les premier et deuxième modules 100, 101 forment une continuité magnétique et la reluctance est faible. Pour une induction générée par l'aimant donnée, le flux magnétique est important générant ainsi une force d'attraction importante.

Selon un exemple, dans les configurations stables, les premier et deuxième modules 100, 101 peuvent être en contact l'un de l'autre au niveau de l'aimant permanent 1031 et au niveau de l'une ou l'autre de la bordure 1030a, 1030b de leur cavité, ou au niveau de l'aimant permanent 1031 et au niveau du relief 1032, ou au niveau de l'une ou l'autre de la bordure 1030a, 1030b de leur cavité et au niveau du relief 1032. Ce contact peut être direct ou par l'intermédiaire d'une couche d'air ou d'un matériau diélectrique d'épaisseur permettant la circulation du flux magnétique, par exemple inférieure à 0,5 mm, et de préférence inférieur à 0,1 mm.

De préférence, le matériau magnétiquement conducteur est un matériau ferromagnétique. Ainsi, le matériau est un bon conducteur du flux magnétique en présentant une faible réluctance. De préférence, le matériau est un matériau ferromagnétique doux. Un matériau ferromagnétique doux est capable de s'aimanter lorsqu'il est soumis à un champ magnétique. En l'absence d'un champ magnétique, le matériau ferromagnétique doux ne conserve qu'une faible et de préférence pas d'aimantation rémanente. Plus préférentiellement, l'aimantation rémanente du matériau ferromagnétique doux est nulle en l'absence du champ magnétique. L'utilisation d'un matériau ferromagnétique doux assure une bonne réactivité des modules de connexion 100, 101. Selon un exemple, le matériau magnétiquement conducteur est du fer doux, un matériau économiquement abordable. Le matériau magnétiquement conducteur peut être de l'acier inoxydable doux.

La géométrie des organes de conduite de champ 102, 103 peut varier selon différents exemples de réalisation. Par exemple, l'ensemble formé par les deux organes de conduite de champ 102, 103 peut être de forme cylindrique d'axe central sensiblement confondu avec un axe d'extension principal de l'aimant 1031. De façon alternative, l'ensemble formé par les deux organes de conduite de champ 102, 103 peut être de forme rectangulaire d'axe d'extension principale sensiblement confondu avec un axe d'extension principale de l'aimant 1031. Il n'est par exemple pas nécessaire que cet ensemble ait une forme de révolution autour de l'aimant 1031.

L'agencement des modules 100, 101 de connexion est maintenant décrit en référence aux figures 2A et 2B. Le système de connexion 1 peut comprendre une pluralité de premier et/ou deuxième modules 100, 101 afin d'améliorer et/ou d'augmenter la connectivité potentielle du système 1. Selon l'exemple illustré en figure 2A, le système de connexion peut comprendre au moins un premier module 100, et un deuxième module 101 situés sur le pourtour externe de la paroi 12, de part et d'autre du système de connexion 1, par exemple selon la direction y. Ainsi, des unités de stockage 2 peuvent être assemblées latéralement les unes avec les autres, au moins selon une direction.

Selon l'exemple illustré en figure 2B, le système de connexion peut comprendre plusieurs premier ou deuxième modules 100, 101, répartis sur le pourtour externe de la paroi 12, de préférence à intervalle régulier dans un plan perpendiculaire à la direction de déplacement relatif des modules 100, 101, par exemple un plan horizontal et/ou sensiblement perpendiculaire à l'axe A. Ainsi, des unités de stockage 2 peuvent être assemblées latéralement les unes avec les autres, au moins dans un plan. Selon l'exemple illustré, quatre modules 100, 101 peuvent être disposés sur le pourtour externe de la paroi 12 à intervalle d'environ 90 °.

Selon le choix du type de module de connexion magnétique 100 ou 101 et leur agencement, le système de connexion 1 permet un détrompage. Le détrompage peut être réalisé de sorte qu'une seule orientation relative d'un système de connexion 1 par rapport à un autre ou par rapport au dispositif d'alimentation 4, permette le raccordement électrique de l'unité de stockage 2. Le détrompage permet ainsi d'éviter un mauvais montage d'une unité de stockage 2, par exemple un montage inversé en termes de polarité. Seul des modules de connexion 100, 101 complémentaires et disposés en regard peuvent permettre la formation du verrou magnétique 1 et donc l'immobilisation de l'unité de stockage 2.

Par exemple, le système de connexion 1 peut comprendre deux premiers modules 100 comprenant le premier organe de conduite 102, disposés dans un premier plan, et deux deuxièmes modules 101 comprenant le deuxième organe de conduite 103, disposés dans un deuxième plan distinct, chacun de ses plans pouvant inclure l'axe central A. De préférence, ces deux plans sont perpendiculaires. De façon alternative ou complémentaire, la disposition selon la direction verticale z peut varier entre les paires de modules 100, 101, de sorte qu'une seule orientation du système de connexion 1 permette un raccordement électrique entre les connecteurs 11.

Notons, qu'on peut prévoir de disposer plusieurs modules de connexion 100, 101 sur le pourtour de la paroi 12 selon une direction verticale, et/ou sensiblement parallèle à l'axe A, ce qui permet d'obtenir des efforts mécaniques mieux répartis et de minimiser le risque de rotation involontaire du système de connexion 1.

Comme illustré sur les figures 3A et 3B, le premier module 100 d'un système de connexion 1 peut être assemblé avec le deuxième module 101 d'un système de connexion 1 distinct, ce qui permet de générer une force magnétique d'attraction maintenant deux unités de stockage 2 ensemble. Dans la première configuration du verrou magnétique 10, la force magnétique d'attraction peut en outre assurer une pression de contact des connecteurs 11 raccordés aux pôles positifs 20 et négatifs 21 de chaque unité de stockage 2. Ce contact permet ainsi la mise connexion électrique et la circulation du courant d'une unité de stockage 2 à l'autre.

Le système de connexion 1 peut être configuré de façon à autoriser un raccordement en parallèle et/ou en série d'une unité de stockage. Comme illustré en figure 3A pour un montage en parallèle, l'agencement des connecteurs 11 et des modules de connexion 100, 101 peut être configuré pour raccorder ensemble d'une part les pôles positifs 20, et d'autre part les pôles négatifs 21, des unités de stockage 2, dans la première configuration du verrou magnétique 10. Comme illustré en figure 3B pour un montage en série, l'agencement des connecteurs 11 et des modules de connexion 100, 101 peut être configuré pour raccorder, dans la première configuration du verrou magnétique 10, successivement un pôle positif 21 d'une unité de stockage 2 puis un pôle négatif 21 d'une unité de stockage 2 adjacente. Pour cela, l'orientation des unités de stockage 2 peut être alternée dans chacun de leur système de connexion 1, pour un branchement en série, de sorte qu'un pôle positif 21 d'une unité de stockage 2 se retrouve en regard d'un pôle négatif 21 d'une unité de stockage 2 adjacente.

Selon un exemple, un système de connexion 1 peut être configuré de façon spécifique à un raccordement en série ou en parallèle d'unités de stockage 2. Selon un exemple alternatif, le système de connexion 1 peut comprendre deux paires de connecteurs électriques 11, la première paire 110 étant configurée pour l'un parmi un raccordement parallèle et un raccordement série, et la deuxième paire 110' pour l'autre parmi un raccordement parallèle et un raccordement série. Un système de connexion 1 unique pour ces deux types de raccordement permet une grande modularité de connexion et d'assemblage des unités de stockage 2.

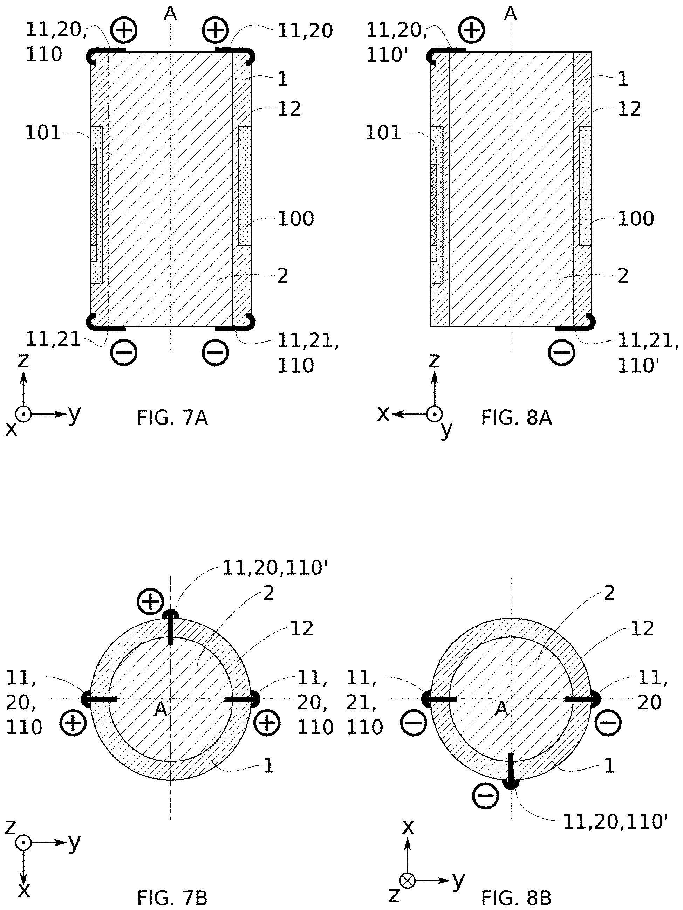

Cette configuration peut être illustrée par les figures 7A à 8B. Selon cet exemple, la première paire de connecteurs 110 peut être disposée selon un premier plan et la deuxième paire de connecteurs 110' peut être disposée selon un deuxième plan distinct, le premier et le deuxième plan incluant de préférence la direction du déplacement de l'unité de stockage 2 de sa première à sa deuxième position. Chacun de ses plans peuvent inclure l'axe central A. De préférence, ces deux plans sont perpendiculaires. Chacune de ces paires 110, 110' peut être associée à un module de connexion magnétique 100, 101, de sorte qu'un verrou magnétique 10 distinct soit formé pour chacune des première 110 et deuxième 110' paires de connecteurs 11. Selon le choix du type de module de connexion magnétique 100 ou 101 et leur agencement, comme décrit précédemment, un détrompage permet d'éviter un mauvais raccordement entre série et parallèle.

La paroi 12 est maintenant décrite en relation aux figures 3A et 3B, et 4 à 5C. La paroi 12 peut être configurée de façon à former une gaine montée sur l'unité de stockage 2, et plus particulièrement autour de son godet, par exemple comme illustré dans les figures 3A et 3B. La paroi 12 peut être à base ou fait d'au moins un matériau isolant électriquement, afin d'isoler le godet de l'unité de stockage 2 de son environnement. Ce matériau peut être un plastique thermodur, par exemple de type époxy, ou thermoplastique. La paroi 12 peut ainsi être mise en forme facilement par moulage.

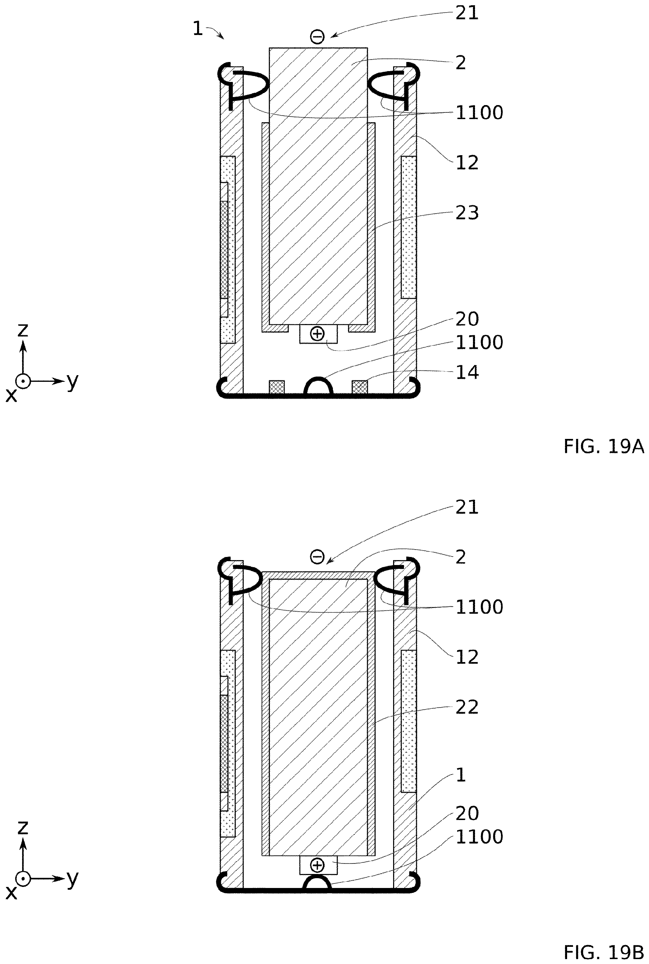

La gaine entourant l'unité de stockage peut comprendre un circuit imprimé et/ou des pièces métalliques embouties et moulées dans le matériau de la paroi 12. La gaine peut en outre comprendre au moins un et de préférence plusieurs éléments de fixation 14 de la paroi 12 à l'unité de stockage 2, décrits plus en détail ultérieurement en référence aux figures 19A à 19E.

Afin de raccorder électriquement la gaine fonctionnelle aux pôles de l'unité de stockage 2, le système de connexion 1 peut en outre comprendre des connecteurs électriques 1100 de la paroi 12 à l'unité de stockage 2, décrit plus en détail ultérieurement en référence aux figures 19A à 19E.

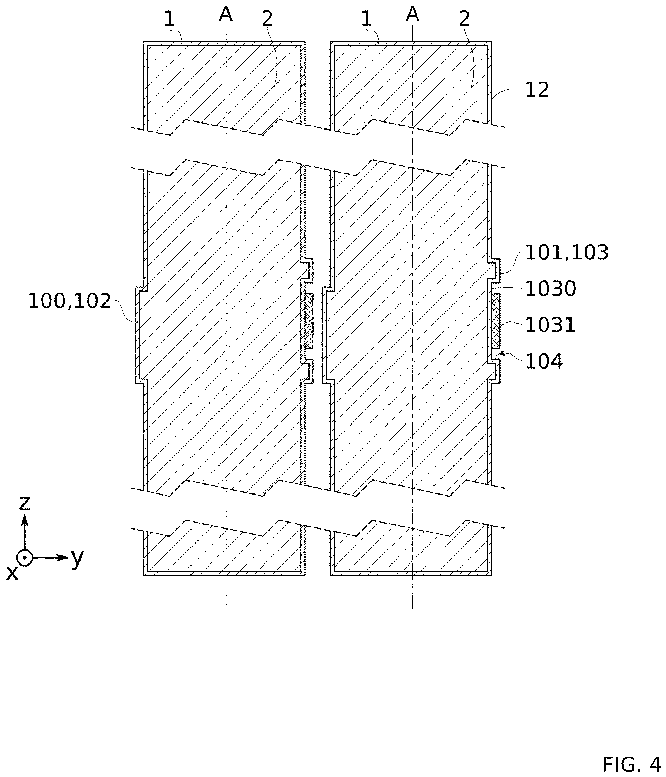

La paroi 12 peut être configurée de façon à former un godet de l'unité de stockage 2, par exemple comme illustré par les figures 4 à 6B. Le godet peut être à base ou fait d'au moins un matériau électriquement conducteur, et de préférence magnétiquement conducteur. Le godet peut plus particulièrement être à base ou fait d'acier inoxydable magnétique. Une portion de la paroi 12 peut être mise en forme de façon à former au moins en partie l'un ou l'autre du premier organe 102 et du deuxième 103 organe de conduite de champ. Par exemple, la paroi 12 peut présenter des reliefs correspondant à l'un ou l'autre du premier organe 102 et du deuxième 103 organe de conduite de champ. L'aimant permanent 1031 peut être collé sur la paroi, ou l'un et/ou l'autre du premier organe 102 et du deuxième 103 organe de conduite de champ peuvent être surmoulés dans une matière isolante, de sorte que les parties des organes de conduite de champ destinées à être en contact magnétiquement restent apparentes.

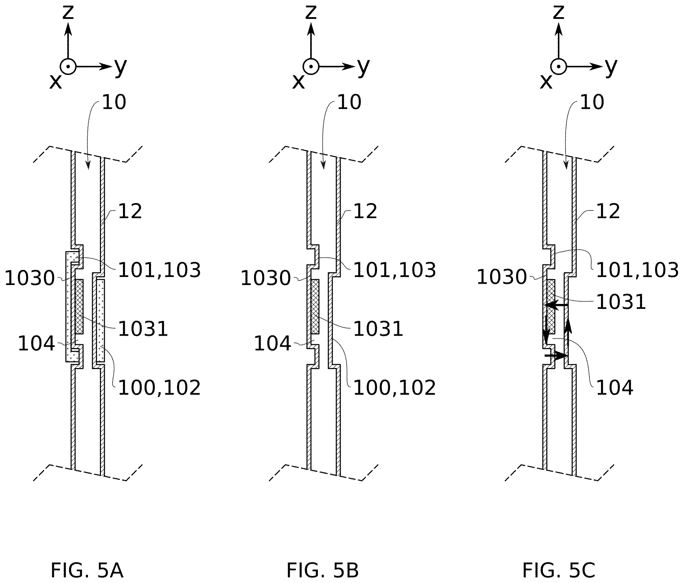

Comme illustré dans la figure 5A, la paroi 12 peut présenter des reliefs configurés pour accueillir des pièces magnétiquement conductrices pour former l'un ou l'autre du premier organe 102 et du deuxième 103 organe de conduite de champ avec en outre l'aimant permanent 1031.

En alternative, comme illustré par les figures 5B et 5C, la paroi peut former, le cas échéant à elle seule avec l'aimant permanent 1031, l'un ou l'autre du premier organe 102 et du deuxième 103 organe de conduite de champ. Pour cela, la paroi 12 présente de préférence une épaisseur supérieure à 1 mm, afin d'assurer une bonne conduction du flux magnétique. La profondeur des reliefs peut être de l'ordre de l'épaisseur de la paroi 12.

Les reliefs de la paroi 12 peuvent être formés par pliage, par emboutissage dans la tôle, de façon à déformer localement la paroi 12. On peut par ailleurs prévoir que ces reliefs soient usinés. De préférence, les reliefs formés par emboutissage présentent des angles arrondis, pour que la déformation de la paroi 12 reste acceptable et limiter l'usure de l'outil d'emboutissage. La figure 5C montre le cheminement du flux magnétique dans le verrou magnétique formé par deux godets, le flux circulant entre les godets étant illustré par les flèches.

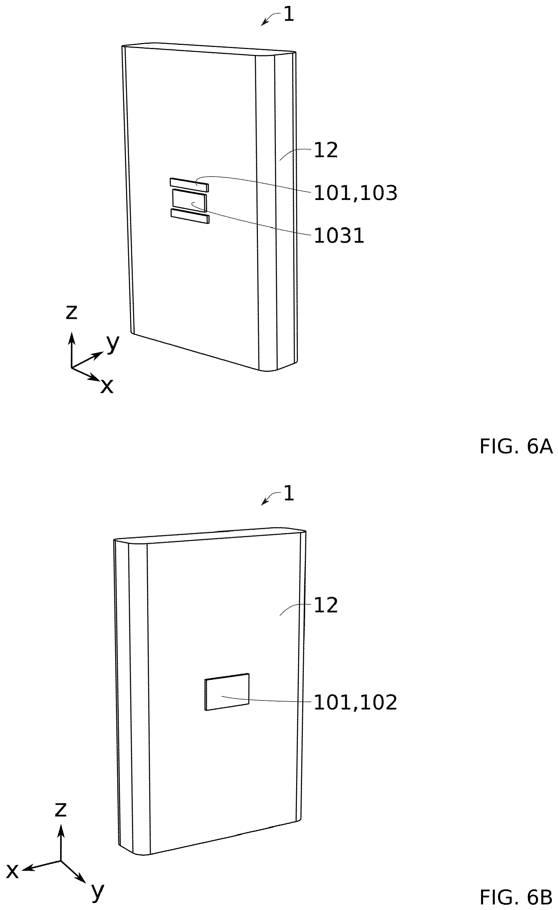

Le système de connexion 1, et notamment la forme de la paroi 12, peut être adapté en fonction de la géométrie de l'unité de stockage 2. Par exemple, l'unité de stockage 2 peut être cylindrique, par exemple comme illustré en figure 2B, ou prismatique, et notamment rectangulaire, comme illustré dans les figures 6A et 6B. La paroi 12 peut présenter une épaisseur comprise entre 1 et 3 mm, afin notamment de limiter le poids du système de connexion 12.

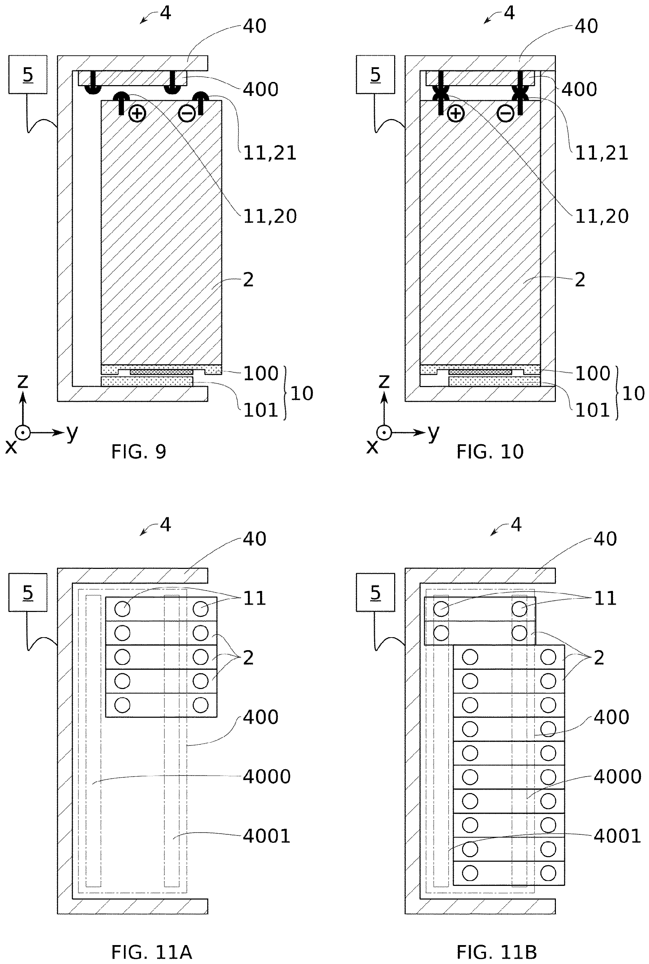

Par ailleurs, les exemples précédemment illustrés détaillent des modes de réalisations dans lesquels le système de connexion 1 est adapté sur une unité de stockage dont les pôles positif 20 et négatif 21 sont opposés selon la direction z. On peut prévoir que le système de connexion 1 soit configuré pour raccorder électrique une unité de stockage 2 dont les pôles positif 20 et négatif 21 sont disposés sur une même face ou un même côté, comme par exemple illustré par les figures 9 et 10.

Un exemple de coopération entre un dispositif d'alimentation 4 d'un appareil 5, et au moins un système de connexion 1 est maintenant décrit en référence aux figures 9 et 10. Le dispositif d'alimentation 4 peut comprendre un support 40 configuré pour recevoir au moins une unité de stockage 2 comprenant le système de connexion 1. Le support 40 peut former une enceinte ou un boitier, configuré pour contenir au moins partiellement, et de préférence totalement, l'unité ou les unités de stockage 2 au moins dans leur première position. Le support 40 peut être configuré pour contenir, de préférence totalement, l'unité ou les unités de stockage 2 dans leur première position et dans leur deuxième position. L'unité ou les unités de stockage 2 peuvent être mobiles relativement au support 40 entre leur première et leur deuxième positions. Le support 40 peut présenter au moins un module de connexion magnétique 100, 101 configuré pour coopérer avec un module 100, 101 complémentaire d'un système de connexion 1. Le support 40 peut comprendre au moins deux modules 100, 101, chacun configuré pour coopérer avec un module 100, 101 complémentaire d'un système de connexion 1, de part et d'autre d'un ensemble d'alimentation 3, comme décrit par exemple en figure 16A. Le support 40 peut en outre comprendre un bus de puissance 400 configuré pour être raccordé par les connecteurs 11 du système de connexion 1 à l'unité de stockage 2. Dans la deuxième configuration du verrou magnétique 10, l'unité de stockage 2 peut ne pas être raccordée au dispositif d'alimentation 4. Le basculement de la deuxième configuration à la première configuration entraine le déplacement de l'unité de stockage 2 et son raccordement électrique par les connecteurs 11, comme l'illustre le passage de la figure 9 à la figure 10. Le dispositif d'alimentation 4 peut comprendre une pluralité d'unités de stockage 2, chacune comprenant de préférence un système de connexion 1. Comme l'illustre la figure 11A, grâce au système de connexion 1, chaque unité de stockage 2 peut être mise dans une position dans laquelle les connecteurs 11 ne sont pas raccordés électriquement au pôle positif 4000 et au pôle négatif 4001 d'un bus de puissance 400. Grâce au verrou magnétique 10, le système de connexion 1 peut être déplacé à une position dans laquelle les connecteurs 11 sont raccordés électriquement au bus de puissance 400.

Un aspect de l'invention peut concerner un procédé de connexion d'au moins une unité de stockage 2 comprenant le système de connexion 1, à un dispositif d'alimentation 4 pour un appareil 5. Ce procédé peut comprendre la fourniture d'une unité de stockage 2 comprenant le système de connexion 1. Au préalable, le procédé peut comprendre le montage du système de connexion 1 sur l'unité de stockage 2, par exemple dans le cas où la paroi 12 du système de connexion 1 forme une gaine de l'unité de stockage.

Le procédé peut comprendre le placement d'au moins une unité de stockage 2 dans un support 40 d'un dispositif d'alimentation 4, comprenant un module de connexion 100, 101 pour former le verrou magnétique 10. L'unité de stockage 2 est disposée de préférence dans la deuxième position, le verrou magnétique 10 étant dans la deuxième configuration. Dans la deuxième position, l'unité de stockage 2 est de préférence non raccordée électriquement au dispositif d'alimentation 4, comme illustré par la figure 11A. Ainsi, aucune tension dangereuse n'est accessible, notamment sur le bus de puissance.

Avant ou après le placement de l'unité de stockage 2 dans le support 40, une unité de stockage 2 distincte, comprenant le système de connexion 1, peut être assemblée avec l'unité de stockage 2 par coopération entre leur système de connexion 1 respectif pour former un ensemble d'alimentation 3.

Le verrou magnétique 10 peut ensuite être basculé dans sa première configuration, induisant le déplacement de l'unité de stockage 2 ou l'ensemble d'alimentation 3 de sa deuxième position à sa première position, dans laquelle l'unité de stockage 2 ou l'ensemble d'alimentation 3 est raccordé électriquement au dispositif d'alimentation 4.

L'ensemble des unités de stockage 2 du dispositif d'alimentation 4 peuvent être placées dans le support 40 avant le raccordement d'une unité de stockage 2. Le procédé de montage peut ensuite comprendre le basculement successif des systèmes de connexion 1 de chaque unité de stockage 2 de la deuxième à la première configuration. Comme illustré par la figure 11B, le bus de puissance 400 est alors sous-tension mais il n'est pas accessible à l'opérateur, l'espace étant complètement rempli par des unités de stockage 2 en cours d'activation. Le raccordement des unités de stockage 2 est ainsi sécurisé.

Le passage de l'une à l'autre des première et deuxième configurations du verrou magnétique 10 peut être induit par l'exercice d'une force sur le système de connexion 1, suffisante pour contrer la force d'attraction magnétique et induire le mouvement relatif du premier module 100 et du deuxième module 101. Le passage peut être actionné par un opérateur, ou un actionneur 13. L'actionneur 13 peut être piloté ou actionnable passivement. L'actionneur peut par exemple pour passer d'une configuration rétractée à une position déployée et ainsi entrainer le changement de configuration du verrou 10.

Selon un exemple, l'actionneur 13 peut être actionné suite à une élévation de la température dans le dispositif d'alimentation 4, et plus particulièrement de la température d'une unité de stockage 2. Lors d'un défaut de fonctionnement d'une unité de stockage 2, l'unité de stockage 2 peut surchauffer. Classiquement, lorsque qu'une unité de stockage 2 est solidaire et raccordée électriquement à un support 40 d'un dispositif d'alimentation 4, ce défaut peut se propager dans le dispositif 4, voire au reste de l'appareil 5. Lors du défaut de fonctionnement, la température de l'unité de stockage 2 peut s'élever au-dessus d'une température seuil. L'actionneur 13 peut alors être actionné pour basculer le système de connexion 1 de la première configuration à la deuxième configuration du verrou 10. Ainsi, l'unité de stockage 2 peut être déplacée dans sa deuxième position, par exemple pour l'éloigner du support 40 et ainsi minimiser sa connexion thermique avec le support 40, et/ou pour la déconnecter électriquement.

Le dispositif d'alimentation peut comprendre un capteur 42 apte à mesurer la température et/ou l'état de l'actionneur 13. Lorsque la température dépasse la valeur seuil et/ou suite à l'actionnement de l'actionneur 13, la mesure peut être transmise à un système de gestion de batterie pour signaler le défaut.

Dans le cas d'un dispositif d'alimentation 4 comprenant une pluralité d'unité de stockage 2 raccordées électriquement entre elles, en série ou en parallèle, la déconnexion électrique d'une unité de stockage entraine classiquement une perte de la continuité électrique entre l'unité de stockage 2 déconnectée et les autres unités, induisant un arrêt de l'alimentation par ces unités de stockage.

Afin d'assurer une continuité de service du dispositif d'alimentation 4, malgré la perte de la continuité électrique entre l'unité de stockage 2 déconnectée et les autres unités, les connecteurs électriques 11 du système de connexion 1 peuvent être configurés de sorte que, dans la première position de l'unité de stockage 2, les connecteurs 11 forment un circuit électrique mettant en continuité électrique l'unité de stockage 2, au moins une unité de stockage 2 adjacente et un circuit d'alimentation 41 du dispositif 4. Dans la deuxième position de l'unité de stockage 2, les connecteurs électriques 11 peuvent former un circuit électrique mettant en continuité électrique l'au moins une unité de stockage adjacente et le circuit d'alimentation 41. L'unité de stockage 2 n'est alors pas raccordée électriquement au circuit d'alimentation 41.

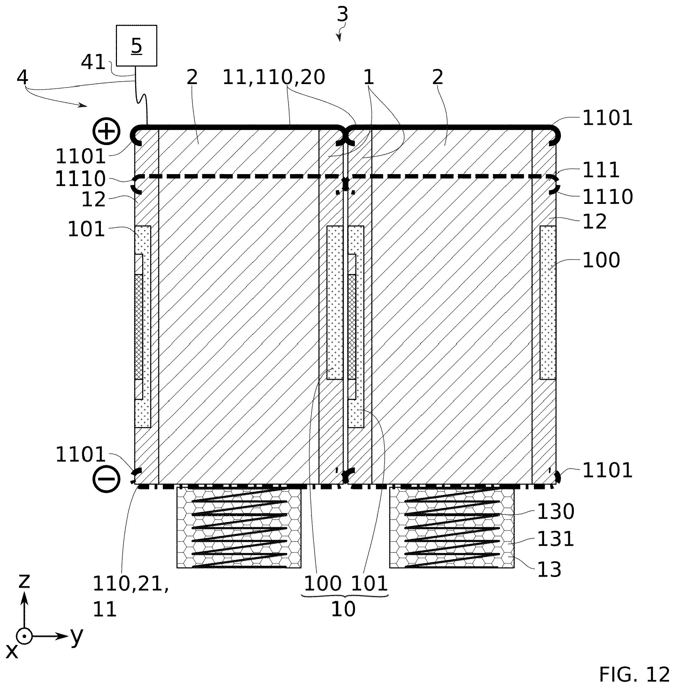

Pour cela, le système de connexion 1 peut comprendre un premier jeu 110 de connecteurs 11 configurés pour raccorder l'unité de stockage 2 dans sa première position, comme décrit précédemment et comme illustré par la figure 12. Le système de connexion 1 peut comprendre en outre un connecteur électrique distinct 111, de préférence un deuxième jeu 111 de connecteurs 11, configuré pour conserver la continuité électrique avec une unité de stockage 2 adjacente à l'unité défectueuse, par exemple en reliant deux unités de stockage 2 disposées de part et d'autre de l'unité défectueuse comme illustré par la figure 13. Le deuxième jeu 111 de connecteurs 11 peut être désigné en anglais par le terme « *bypass connectors ».*

Deux unités de stockage 2 comprenant le système de connexion 1 peuvent être assemblées ensemble magnétiquement, le verrou magnétique 10 étant dans sa première configuration, comme illustré par la figure 12. Le premier jeu 110 de connecteurs raccorde électriquement les unités de stockage 2. Suite à un défaut de fonctionnement d'une unité de stockage 2, l'actionneur 13 induit le passage du verrou magnétique à la deuxième configuration, et déplace ainsi l'unité de stockage défectueuse dans sa deuxième position. Le connecteur 110, solidaire de l'unité 2 défectueuse, est alors isolé de l'unité 2 adjacente. Les connecteurs 111 sont aptes à être solidarisés avec l'unité de stockage 2. Les connecteurs 111 sont ainsi déplacés avec l'unité de stockage 2 défectueuse et peuvent alors venir raccorder l'unité de stockage 2 adjacente, sans connecter l'unité défectueuse par au moins l'un de ses pôles, comme par exemple illustré par la figure 13.

Cette mise en continuité fonctionne de façon synergique avec l'utilisation d'un verrou magnétique 10 bistable. En effet, le verrou magnétique 10 bistable permettant un placement suffisamment précis de l'unité de stockage 2 dans deux positions, le deuxième jeu de connecteurs 111 peut être disposé de façon précise en contact avec l'unité de stockage adjacente, et notamment les connecteurs 110 du système de connexion 1 adjacent. Notons qu'en complément du placement précis permis par le verrou magnétique 10, le support 40 peut comprendre une butée 401 contre laquelle l'unité défectueuse peut venir en appui, comme illustré en figure 13. Selon un exemple, le support 40 forme un cadre contenant les unités de stockage 2 et servant de butée 401 à l'unité de stockage 2 dans la deuxième position.

Selon un exemple, l'actionneur 13 peut être actionné par un système de gestion de batterie, communément désigné en anglais par le terme « *Battery Management System ».* Selon un autre exemple, l'actionneur 13 peut être thermosensible et être actionné passivement par l'élévation de température. On peut prévoir que l'actionneur 13 comprenne un organe élastique présentant un corps thermosensible, rétracté en dessous de la température seuil, et déployé en dessus de la température seuil. Pour cela, l'organe élastique peut être fait d'un matériau présentant une transition de phase solide sensiblement à la température seuil. L'élément thermosensible peut plus particulièrement être un ressort à base d'un alliage à mémoire de forme.

Selon un exemple alternatif, l'actionneur 13 peut comprendre un organe élastique 130, tel qu'un ressort, retenu dans une configuration rétractée par un matériau fusible 131. L'organe élastique 130 et/ou le matériau fusible 131 peut être placé directement en contact avec l'unité de stockage 2 pour favoriser le contact thermique. Lorsque l'unité de stockage 2 s'échauffe anormalement, le matériau fusible fond et induit une libération de l'organe élastique 130 venant exercer une force sur le système de connexion 1, comme l'illustre par exemple le passage de la figure 12 à la figure 13.

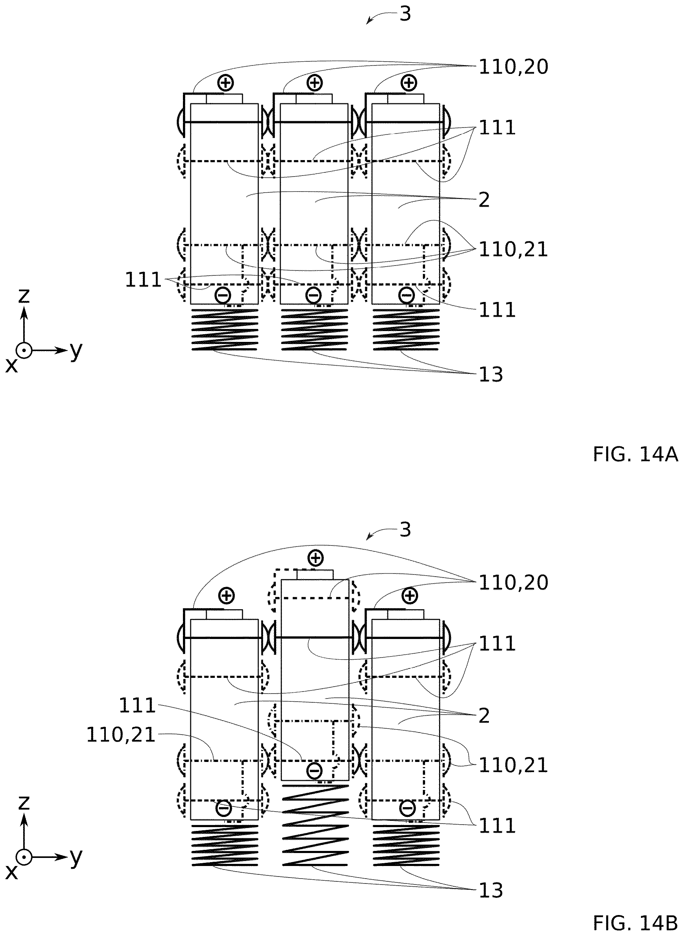

Plusieurs exemples du système de connexion 1 peuvent être réalisés pour répondre à la problématique de continuité de service en cas de défaillance d'une unité de stockage 2. Ces exemples sont maintenant détaillés en références aux figures 14A à 18D.

Comme illustré par les figures 14A et 14B, les unités de stockage 2 peuvent être reliées en elles en parallèle par leur système de connexion 1. Notamment, les pôles positifs 20 peuvent être reliés entre eux par des connecteurs 110. Les pôles négatifs 21 peuvent être reliés entre eux par des connecteurs 110. Le système peut comprendre un deuxième jeu 111 de connecteurs, par exemple reliés entre eux, et non reliés au reste du dispositif d'alimentation 4, lorsque les unités de stockage 2 sont dans leur première position. Leur potentiel peut donc être nul. Le deuxième jeu 111 de connecteurs peut comprendre un premier connecteur 111 destiné à raccorder les connecteurs 110 des pôles positifs 20 des unités adjacentes, et un deuxième connecteur 111 destiné à raccorder les connecteurs 110 des pôles négatifs 21 des unités adjacentes, suite au déplacement de l'unité défectueuse à sa deuxième position.

Les connecteurs 111 peuvent s'étendre selon une direction sensiblement parallèle aux connecteurs 110. Le deuxième jeu 111 de connecteurs est de préférence espacé du premier jeu 110 de connecteurs d'une distance sensiblement égale à la longueur de course de l'unité de stockage 2 entre sa première et sa deuxième position. Lors du déplacement de l'unité de stockage défectueuse à sa deuxième position, ses pôles positif 20 et négatif 21 sont électriquement déconnectés des unités adjacentes. Le deuxième jeu de connecteur 111 est alors en continuité électrique avec les unités adjacentes.

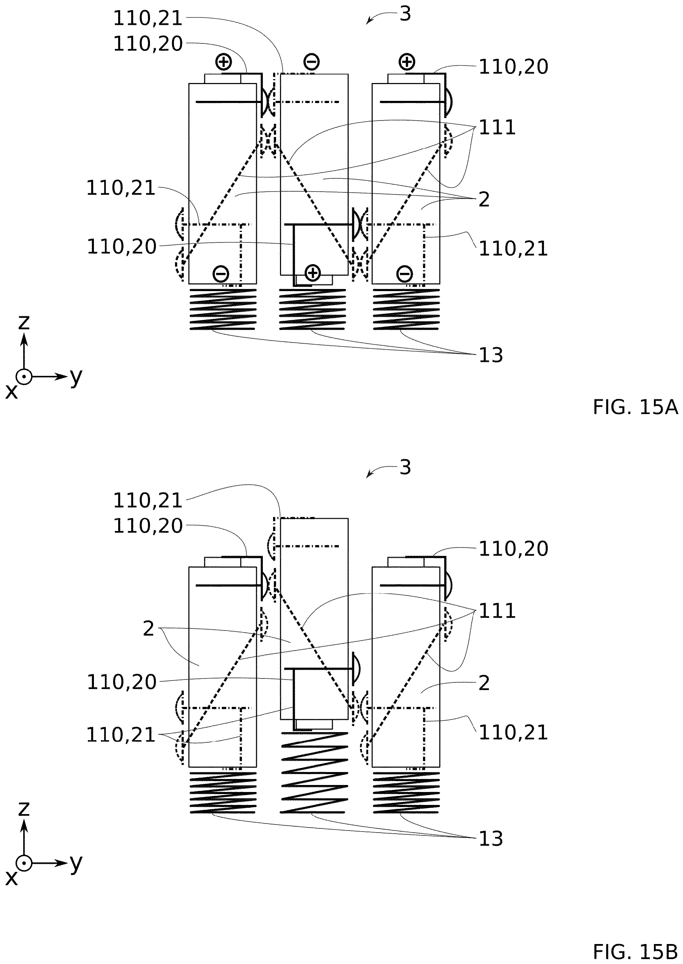

Comme illustré par les figures 15A et 15B, les unités de stockage 2 peuvent être reliées en série entre elles par leur système de connexion 1. Notamment, chaque pôle positif 20 d'une unité de stockage 2 peut être connecté au pôle négatif 21 de l'unité adjacente par le premier jeu 110 de connecteurs. Le système peut comprendre un deuxième jeu 111 de connecteurs, par exemple reliés entre eux, et non reliés au reste du dispositif d'alimentation 4, lorsque les unités de stockage 2 sont dans leur première position. Le deuxième jeu 111 de connecteurs peut comprendre un connecteur 111 destiné à raccorder le pôle positif 20 d'une première unité de stockage adjacente au pôle négatif d'une deuxième unité de stockage adjacente, suite au déplacement de l'unité défectueuse à sa deuxième position.

De même, le connecteur 111 est de préférence espacé du premier jeu 110 de connecteurs d'une distance sensiblement égale à la longueur de course de l'unité de stockage 2 entre sa première et sa deuxième position. Lors du déplacement de l'unité de stockage défectueuse, ses pôles positif 20 et négatif 21 sont électriquement déconnectés des unités adjacentes. Le connecteur 111 est alors en continuité électrique avec les unités adjacentes.

Notons que le ou les connecteurs 111 peuvent être configurés pour raccorder entre elles des unités de stockage adjacentes à l'unité défectueuse, ou pour raccorder une unité de stockage adjacente à l'unité défectueuse au circuit d'alimentation 41 d'un dispositif d'alimentation 4, comme illustré par les figures 16A à 17B.

La coopération du système de connexion 1 avec un support 40 du dispositif d'alimentation est maintenant décrite en référence aux figures 16A à 17B. Pour permettre une connexion en parallèle, les unités de stockage 2 peuvent être assemblées latéralement par leur système de connexion 1, comme précédemment décrit. Toutes les unités de stockage 2 peuvent être orientées dans le même sens, relativement à leur polarité, par exemple avec la polarité positive sur le dessus, comme illustré par la figure 16A. La figure 16B montre un exemple dans lequel la troisième unité de stockage est défaillante. L'actionneur 13 peut être actionné, par exemple à cause de réchauffement excessif de l'unité, et induire le déplacement de l'unité dans sa deuxième position.

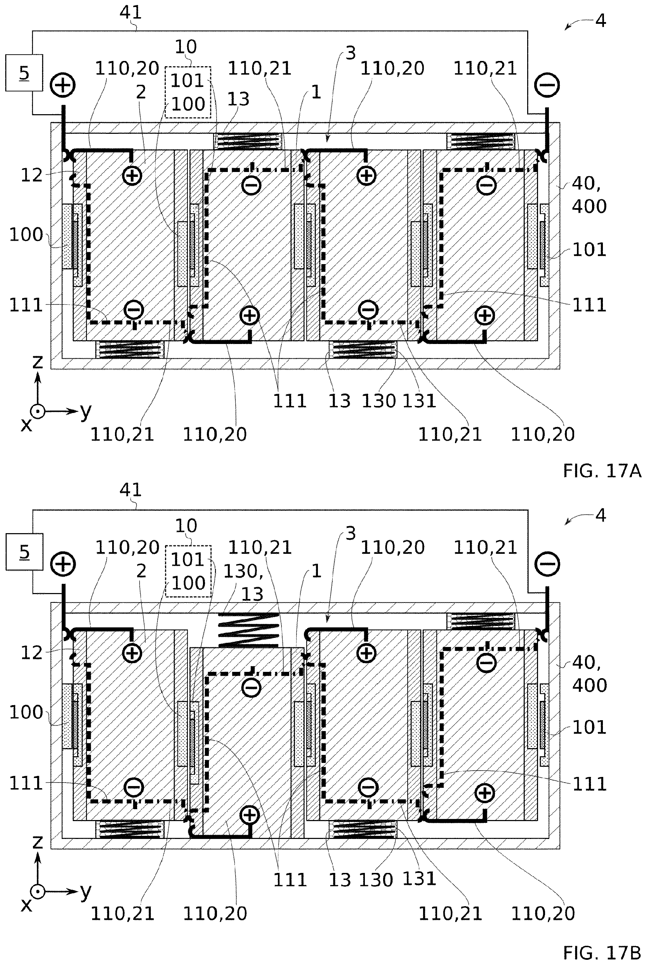

Pour permettre une connexion en série, un premier exemple est décrit. Les unités de stockage 2 peuvent être assemblées latéralement par leur système de connexion 1, comme précédemment décrit. Entre les différentes unités de stockage 2 l'orientation relative entre le système de connexion 1 et l'unité de stockage peut être identique. De façon équivalente, les différentes unités de stockage 2 peuvent être disposées de la même façon dans leur système de connexion 1 respectif. L'orientation des unités de stockage 2 entre elles peut être alternée relativement à leur polarité, par exemple avec la polarité positive sur le dessus pour une première unité de stockage 2, puis sur le dessous pour l'unité de stockage 2 adjacente, comme illustré par la figure 17A. Selon cet exemple, le deuxième connecteur 111 d'un système de connexion s'étend depuis la paroi 12 du système de connexion 1 jusqu'au connecteur 110 du pôle négatif 21 de l'unité de stockage 2 comprenant le même système de connexion 1.

La figure 17B montre un exemple dans lequel la deuxième unité de stockage 2 est défaillante. L'actionneur 13 peut être actionné et induire le déplacement de l'unité 2 dans sa deuxième position. Selon cet exemple, le déplacement induit également une déconnexion d'une unité de stockage 2 adjacente, une continuité électrique étant formée entre le connecteur 111 et le connecteur 110 du pôle négatif 21 du système de connexion 1, et le connecteur 111 du système de connexion 1 adjacente. Dans cette configuration, les actionneurs 13 des unités de stockage 2 sont de préférence disposés successivement de part et d'autre de l'ensemble formé par les unités de stockage et leur système de connexion 1.

Pour un deuxième exemple de connexion en série, pouvant être représenté par les figures 15A et 15B, seule l'unité de stockage 2 défaillante peut être déconnectée. Pour cela, entre les différentes unités de stockage 2, l'orientation relative entre le système de connexion 1 et l'unité de stockage peut être alternée relativement à sa polarité. De façon équivalente, les différentes unités de stockage 2 peuvent être disposées dans leur système de connexion 1 respectif de façon successivement inversée relativement à leur polarité. Selon cet exemple, l'orientation des unités de stockage 2 entre elles est en outre alternée relativement à leur polarité, avec la polarité positive sur le dessus pour une première unité de stockage 2, puis sur le dessous pour l'unité de stockage 2 adjacente, comme illustré par la figure 15A. Le système de connexion reste de préférence structurellement le même entre les unités de stockage 2. Dans cette configuration, les actionneurs 13 des unités de stockage 2 sont de préférence disposés d'un même côté de l'ensemble formé par les unités de stockage et leur système de connexion 1.

Selon un exemple, le système de connexion 1 peut être configuré de façon spécifique à une mise en continuité pour un raccordement en série ou en parallèle d'unités de stockage 2. Selon un exemple alternatif, le système de connexion 1 peut comprendre les jeux de connecteurs 110, 111 permettant à la fois un raccordement et une mise en continuité en série et en parallèle. Ainsi, un système de connexion unique 1 permet une encore plus grande modularité de connexion et d'assemblage des unités de stockage 2.

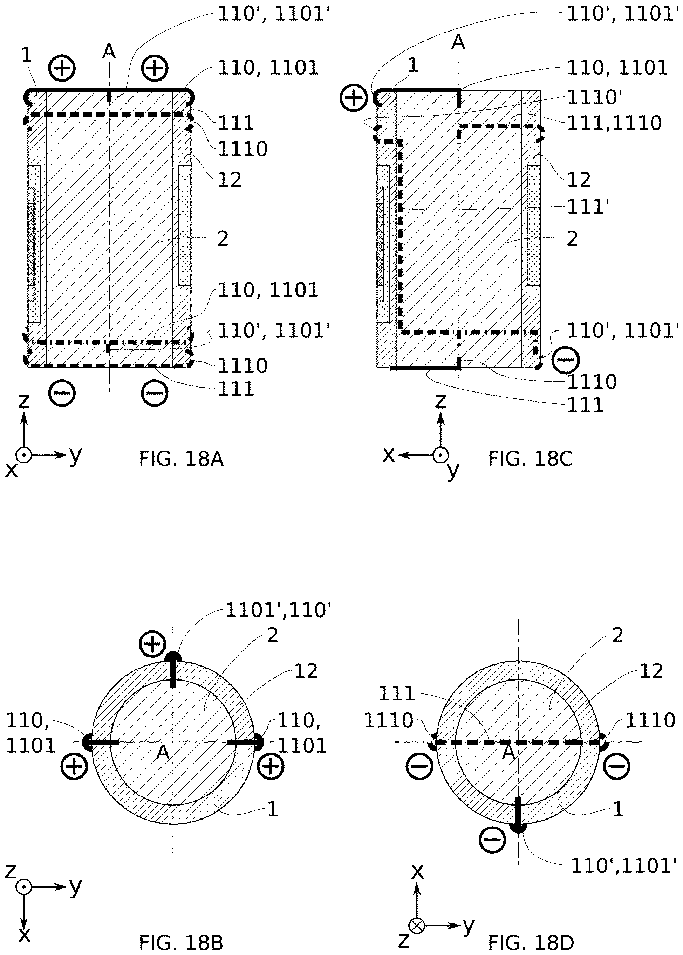

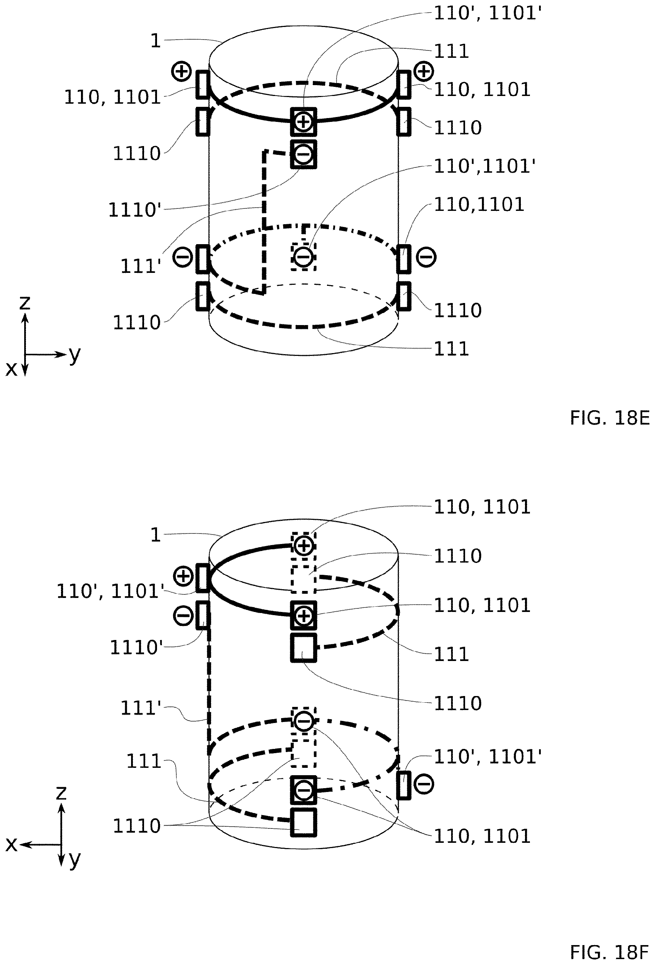

Cette configuration peut être illustrée par les figures 18A à 18F. Selon cet exemple, une première paire de connecteurs 110 et une première paire de connecteur 111 peuvent être au moins en partie disposées selon un premier plan pour permettre le raccordement et la mise en continuité d'unité de stockage 2 en parallèle, comme illustré par la figure 18A, 18E et 18 F. Une deuxième paire de connecteurs 110' et au moins un deuxième ou une deuxième paire de connecteurs 111' peuvent être au moins en partie disposées dans un deuxième plan pour permettre le raccordement et la mise en continuité d'unité de stockage 2 en série, comme illustré par la figure 18C, 18E et 18 F. Plus particulièrement, les contacts électriques 1110 et 1101 peuvent être disposés dans le premier plan, et les contacts électriques 1101' et 1110' peuvent être disposés dans le deuxième plan, comme illustré par les figures 18A et 18C, 18E et 18 F. Le premier plan est alors distinct du deuxième, ces deux plans incluant de préférence la direction du déplacement relatif de l'unité de stockage 2 de sa première à sa deuxième position. Chacun de ces plans pouvant inclure l'axe central A. De préférence, ces deux plans sont perpendiculaires, comme l'illustre la vue du dessus du système de connexion 1 en figure 18B, et la vue du dessous du système de connexion 1 en figure 18D.

Comme décrit précédemment, le système de connexion peut être configuré de sorte qu'un verrou magnétique 10 distinct soit formé pour le raccordement en série et pour le raccordement en parallèle. Selon le choix du type de module de connexion magnétique 100 ou 101 et leur agencement, comme décrit précédemment, un détrompage permet d'éviter un mauvais raccordement entre série et parallèle.

Les connecteurs électriques 11, 110, 111 sont de préférence montés sur la paroi 12 du système de connexion 1. Lorsque la paroi 12 est à base ou faite d'un matériau isolant, les différents connecteurs électriques 11, 110, 111 peuvent être intégrés sur ou dans la paroi 12 sur forme de méplat conducteur ou éventuellement de fil, l'ensemble étant isolé par le matériau de la gaine.

Afin de permettre un contact efficace entre un système de connexion 1 et le support 40 et/ou d'autres systèmes de connexion 1, les connecteurs 11, 110, 111 peuvent comprendre des contacts électriques 1101, 1110 électriquement conducteurs, et de préférence élastiques. Ces contacts électriques peuvent par exemple être des lamelles élastiques et conductrices, par exemple à base de cuivre et de préférence en cuivre béryllium. Les contacts à base de cuivre sont courants du fait de la bonne conductibilité électrique de ces matières. L'alliage de cuivre béryllium présente de très bonnes performances mécaniques, notamment en termes d'élasticité, tout en assurant une très bonne conduction électrique. Le choix dans les nuances et les duretés du matériau électriquement conducteur permet de réaliser des contacts plus ou moins rigides, ou très élastiques avec un fort effet ressort.

Lorsque la paroi 12 du système de connexion 1 forme une gaine de l'unité de stockage 2, la paroi 12 peut en outre comprendre au moins un et de préférence plusieurs connecteurs électriques 1100 de la paroi à l'unité de stockage 2, décrit en référence aux figures 19A et 19B. Les connecteurs 1100 peuvent comprendre des contacts électriques élastiques et électriquement conducteurs, configurés pour venir en appui sur les pôles positif 20 et négatif 21 de l'unité de stockage 2. De même que pour les connecteurs 11, 110, 111, ces contacts peuvent par exemple être des lamelles élastiques et conductrices, par exemple à base de cuivre et de préférence en cuivre béryllium. De façon alternative ou complémentaire, les connecteurs 1100 peuvent être fixés, par exemple soudés, aux pôles positif 20 et négatif 21 de l'unité de stockage 2.

Les connecteurs 110, 111, 1100 en cuivre béryllium peuvent être fabriqués à partir de feuillard de cuivre fin. Les connecteurs et/ou les contacts électriques peuvent recevoir divers traitements connus pour augmenter leur conductivité et/ou pour améliorer les couples galvaniques, et/ou pour les protéger contre l'oxydation et la corrosion.

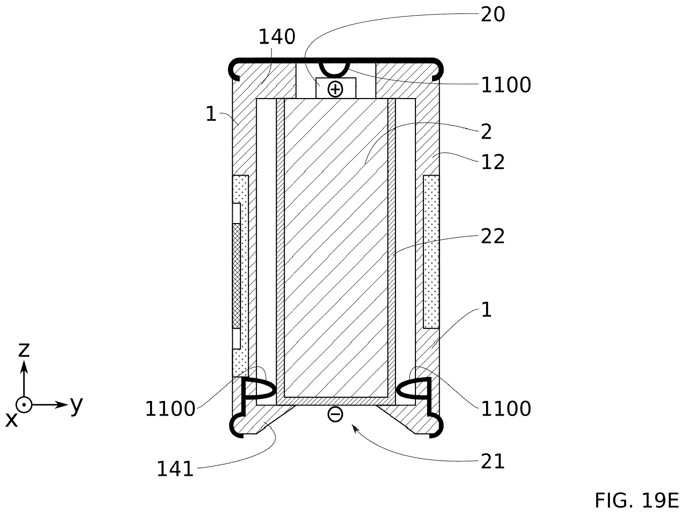

Pour monter l'unité de stockage 2 dans le système de connexion 1, si l'unité de stockage 2 comprend déjà une gaine 23 isolante, la gaine 23 de l'unité de stockage 2 peut être en partie retirée pour dégager une polarité, généralement négative. Cette opération peut être réalisée par découpe laser ou à l'aide d'un outil manuel. Les connecteurs 1100 peuvent ainsi relier la polarité dégagée au reste du système de connexion 1, comme illustré par exemple par la figure 19A. Selon un autre exemple, dans lequel l'unité de stockage 2 comprend un godet 22 métallique conducteur, généralement de polarité négative, les connecteurs 1100 peuvent relier la polarité du godet 22 au reste du système de connexion 1, comme illustré par exemple par les figures 19B ou 19E.

Lorsque la paroi 12 forme une gaine de l'unité de stockage 2, la paroi 12 peut en outre comprendre au moins un et de préférence plusieurs éléments de fixation 14 de la paroi 12 à l'unité de stockage 2, décrits dans la suite en référence aux figures 19A à 19E. Les éléments de fixation 14 peuvent être configurés de sorte que le système de connexion 1, notamment par la paroi 12, est monté de façon amovible sur l'unité de stockage 2, manuellement ou par l'intermédiaire d'outils.

Selon un premier exemple illustré par la figure 19A, les éléments de fixation 14 peuvent être des aimants configurés pour exercer une force d'attraction sur l'unité de stockage 2 pour la maintenir dans le système de connexion 1. Selon un exemple, le godet de l'unité de stockage 2 peut être magnétique, et plus particulièrement en hilumin. L'hilumin est un acier de type DC04 revêtu d'un nickelage électrolytique.

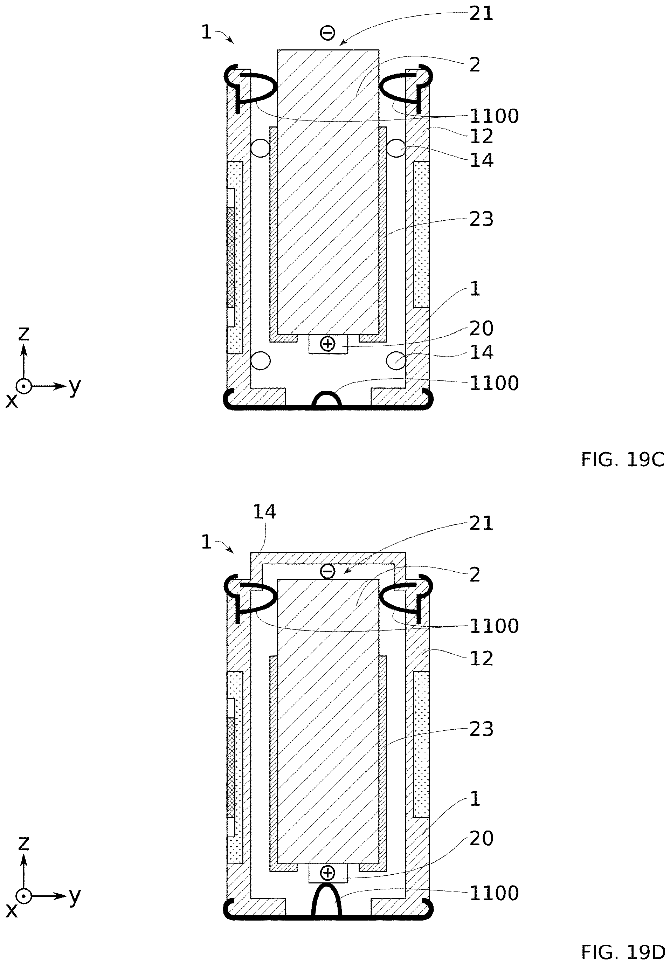

Selon un autre exemple illustré par la figure 19C, les éléments de fixation 14 peuvent être des organes élastiques et/ou déformables. Deux rondelles déformables peuvent être disposées sur le pourtour interne de la paroi 12 afin de maintenir l'unité de stockage 2 dans le système de connexion 1. Le matériau déformable peut être du caoutchouc, par exemple du butyl-caoutchouc ou du caoutchouc-nitrile ou autre dérivé. Ces matériaux présentent avantageusement un fort pouvoir d'adhésion et une capacité de déformation permettant l'introduction de l'unité de stockage et son maintien dans le système de connexion 1. En outre, les éléments de fixation 14 peuvent alors assurer une étanchéité vis-à-vis de l'eau entre l'unité de stockage 2 et le milieu extérieur au système de connexion 1.

Selon un autre exemple illustré par la figure 19D, l'élément de fixation 14 peut être un couvercle configuré pour refermer la paroi 12 du système de connexion 1, afin de maintenir l'unité de stockage 2 dans la paroi. Le couvercle peut être fixé à la paroi 12, par exemple collé, soudé ou simplement enclenché de force.

L'élément de fixation 14 peut en alternative être un collier ou une bague, par exemple un circlip. La paroi 12 peut présenter une gorge de fixation de l'élément de fixation 14 sur son pourtour interne. L'élément de fixation 14 peut par exemple être inséré dans la gorge manuellement ou à l'aide d'une pince. Ce type de fixation présente comme avantage de se démonter facilement.

Selon un autre exemple illustré par la figure 19E, les éléments de fixation 14 peuvent comprendre une première butée 140 et une deuxième butée, configurées pour bloquer mécaniquement l'unité de stockage 2 dans le système de connexion 1. Pour cela, la première butée 140 peut être disposée à une extrémité de la paroi 12 et former une surface d'appui de l'unité de stockage 2 au fond du système de connexion 1. La deuxième butée 141 peut être disposée à l'autre extrémité de la paroi 12, le long du pourtour de la paroi 12. La deuxième butée 141 peut être configurée de façon à autoriser l'insertion de l'unité de stockage dans le système de connexion 1 et à bloquer son retrait. Pour cela, la deuxième butée 141 peut être déformable élastiquement, et configurée de sorte que l'unité de stockage 2 est insérée à travers la deuxième butée 141, par le biais d'une ouverture centrale, en déformant élastiquement la butée 141. Lorsque l'unité de stockage 2 est entièrement passée par la deuxième butée 141, la deuxième butée retrouve sa forme initiale et maintien l'unité dans le système de connexion 1. La deuxième butée 141 peut notamment présenter une ouverture centrale dont la bordure est de forme biseautée, l'ouverture centrale étant de dimensions inférieures à celles de la section transverse de l'unité de stockage 2.

Au vu de la description qui précède, il apparaît clairement que l'invention propose un système de connexion facilitant le montage et la connexion d'une unité de stockage électrique.

L'invention n'est pas limitée aux modes de réalisations précédemment décrits et s'étend à tous les modes de réalisation couverts par l'invention. La présente invention ne se limite pas aux exemples précédemment décrits. Bien d'autres variantes de réalisation sont possibles, par exemple par combinaison de caractéristiques précédemment décrites, sans sortir du cadre de l'invention. En outre, les caractéristiques décrites relativement à un aspect de l'invention peuvent être combinées à un autre aspect de l'invention.

### LISTE DES REFERENCES

- 1: Système de connexion
- 10: Verrou magnétique
- 100: Premier module de connexion magnétique
- 101: Deuxième module de connexion magnétique
- 102: Premier organe de conduite d'un champ magnétique
- 103: Deuxième organe de conduite d'un champ magnétique
- 1030: Cavité
- 1030a: Bordure de cavité
- 1031: Aimant permanent
- 104: Entrefer
- 11: Connecteur électriques
- 110: Première paire de connecteurs
- 110': Deuxième paire de connecteurs
- 1100: Connecteurs électriques de la paroi à l'unité de stockage
- 1101: Contact électrique
- 1101': Contact électrique
- 111: Connecteurs de mise en continuité
- 111': Connecteurs de mise en continuité
- 1110: Contact électrique
- 1110': Contact électrique
- 12: Paroi
- 13: Actionneur
- 130: Organe élastique
- 131: Enveloppe fusible
- 14: Éléments de fixation
- 140: Première butée
- 141: Deuxième butée
- 2: Unité de stockage
- 20: Pôle positif
- 21: Pôle négatif
- 22: Godet
- 3: Ensemble d'alimentation
- 4: Dispositif d'alimentation
- 40: Support
- 400: Bus de puissance
- 4000: Pôle positif
- 4001: Pôle négatif
- 401: Butée
- 41: Circuit d'alimentation
- 42: Capteur
- 5: Appareil

## Revendications

1. Système (1) de connexion d'au moins une unité de stockage (2) d'énergie électrique, pour un dispositif d'alimentation électrique (4), le système (1) comprenant :
- au moins un premier module (100) de connexion magnétique apte à être solidarisé à l'unité de stockage (2), et configuré pour coopérer avec un deuxième module (101) de connexion magnétique et former un verrou magnétique (10) présentant une première configuration dans laquelle le premier module (100) et le deuxième module (101) sont attirés magnétiquement l'un à l'autre, de façon à immobiliser l'unité de stockage (2) dans une première position,
- des connecteurs électriques (11) configurés pour raccorder électriquement l'unité de stockage (2) au dispositif d'alimentation (4), dans sa première position,
**caractérisé en ce que** le verrou magnétique (10) présente une deuxième configuration dans laquelle le premier module (100) et le deuxième module (101) sont attirés magnétiquement l'un à l'autre, de façon à immobiliser l'unité de stockage (2) dans une deuxième position différente de la première position.

2. Système (1) selon la revendication précédente dans lequel, dans la deuxième position, les connecteurs électriques (11) sont configurés pour ne pas raccorder électriquement l'unité de stockage (2) au dispositif d'alimentation (4), par le biais d'au moins un des pôles de l'unité de stockage (2).

3. Système (1) selon l'une quelconque des revendications précédentes, comprenant une paroi (12) configurée pour former un pourtour au moins partiel de l'unité de stockage (2), la paroi (12) formant un godet ou une gaine de l'unité de stockage (2), et pour recevoir le premier module (100) de connexion magnétique.

4. Système (1) selon l'une quelconque des revendications précédentes, dans lequel
le premier module (100) est mobile relativement au deuxième module (101) entre
la première configuration et la deuxième configuration sous l'exercice d'une force s'exerçant sur le système de connexion.

5. Système (1) selon l'une quelconque des revendications précédentes, dans lequel le premier module (100) est configuré pour coopérer avec le deuxième module (101) de façon à former un circuit magnétique présentant une reluctance induisant la génération d'une force d'attraction suffisante pour maintenir ensemble le premier module (100) et le deuxième module (101), dans chacune des première et deuxième configurations.

6. Système (1) selon l'une quelconque des revendications précédentes, dans lequel le premier module (100) est configuré pour coopérer avec le deuxième module (101) de sorte que le verrou magnétique (10) présente au moins une configuration intermédiaire entre la première configuration et la deuxième configuration, le verrou magnétique (10) formant, dans la configuration intermédiaire, un circuit magnétique de reluctance supérieure à une reluctance d'un circuit magnétique formé dans chacune des première et deuxième configurations.

7. Système (1) selon la revendication précédente, dans lequel, le premier module (100) étant configuré pour coopérer avec le deuxième module (101) de façon à former un circuit magnétique présentant une reluctance induisant la génération d'une force d'attraction suffisante pour maintenir ensemble le premier module (100) et le deuxième module (101) dans chacune des première et deuxième configurations, le verrou magnétique (10) forme, pour chacune des au moins une configuration intermédiaire, un circuit magnétique de reluctance induisant la génération d'une force d'attraction suffisante pour maintenir ensemble le premier module (100) et le deuxième module (101), cette force étant inférieure à celle générée dans chacune des première et deuxième configurations.

8. Système (1) selon l'une quelconque des revendications précédentes, dans lequel le premier module (100) :
- comprend l'un parmi :
∘ un premier organe (102) de conduite d'un champ magnétique à base d'un matériau ferromagnétique doux, et
∘ un deuxième organe (103) de conduite d'un champ magnétique à base d'un matériau ferromagnétique doux, comprenant trois reliefs (1030a, 1030b, 1031, 1032) séparés successivement par un entrefer (104) selon une direction de déplacement relatif entre le premier module (100) et le deuxième module (101),
∘ le premier organe (102) de conduite ou le deuxième organe (103) comprenant au moins un aimant (1031)
- est apte à coopérer avec le deuxième module (101) comprenant l'autre parmi ledit premier organe (102) de conduite et ledit deuxième organe (103) de conduite,
- de sorte que :
∘ dans la première configuration, le premier organe (102) de conduite est au moins partiellement, et de préférence totalement, en regard avec un premier relief et un deuxième relief parmi les trois reliefs du deuxième organe (103) de conduite, le premier organe (102) de conduite, le premier relief ou le deuxième relief comprenant un aimant (1031), et
∘ dans la deuxième configuration, le premier organe (102) de conduite est au moins partiellement, et de préférence totalement, en regard avec le deuxième relief et un troisième relief parmi les trois reliefs du deuxième organe (103) de conduite, du deuxième organe (103) de conduite, le premier organe (102) de conduite, le deuxième relief ou le troisième relief comprenant un aimant (1031).

9. Système (1) selon l'une quelconque des revendications précédentes, dans lequel le premier module (100) :
- comprend l'un parmi :
∘ un premier organe (102) de conduite d'un champ magnétique à base d'un matériau ferromagnétique doux, et
∘ un deuxième organe (103) de conduite d'un champ magnétique à base d'un matériau ferromagnétique doux, présentant une cavité (1030) dans laquelle un aimant permanent (1031) est logé,
- est apte à coopérer avec le deuxième module (101) comprenant l'autre parmi :
∘ un premier organe (102) de conduite du champ magnétique à base d'un matériau ferromagnétique doux, et
∘ un deuxième organe (103) de conduite du champ magnétique à base d'un matériau ferromagnétique doux, présentant une cavité (1030) dans laquelle un aimant permanent (1031) est logé,
- de sorte que le premier organe (102) de conduite est au moins partiellement, et de préférence totalement, en regard avec l'aimant permanent (1031) et une première bordure (1030a) de la cavité (1030) du deuxième organe (103) de conduite, dans la première configuration, et le premier organe (102) de conduite est au moins partiellement, et de préférence totalement, en regard avec l'aimant permanent (1031) et une deuxième bordure (1030b) de la cavité (1030) du deuxième organe (103) de conduite, dans la deuxième configuration.

10. Système (1) selon l'une quelconque des revendications précédentes, le système (1) de connexion est apte à former au moins un verrou magnétique additionnel en comprenant au moins un parmi un premier module (100) et un deuxième module (101) de connexion magnétique.

11. Système (1) selon l'une quelconque des revendications précédentes, dans lequel le système (1) comprend une paire (110) de connecteurs électriques (11) configurée pour raccorder électriquement en parallèle ou en série l'unité de stockage (2) au dispositif d'alimentation (4), dans sa première position.

12. Système (1) selon la revendication précédente, dans lequel :
- la première paire (110) de connecteurs électriques (11) est disposée selon un premier plan et est configurée pour raccorder électriquement en parallèle l'unité de stockage (2) au dispositif d'alimentation (4), dans sa première position,
le système (1) comprenant en outre :
- une deuxième paire (110') de connecteurs électriques disposée selon un deuxième plan et configurée pour raccorder électriquement en série l'unité de stockage (2) au dispositif d'alimentation (4), dans sa première position, le premier plan et le deuxième étant distincts, et
- l'un parmi un premier module (100) de connexion magnétique et un deuxième module (101) de connexion magnétique additionnel, le premier module de connexion magnétique (100) et le module de connexion magnétique (100, 101) additionnel étant disposés de façon à chacun coopérer avec un module (100, 101) de connexion magnétique complémentaire, et former un verrou magnétique (10) distinct pour chacune des première (110) et deuxième (110') paires de connecteurs.

13. Unité de stockage (2) d'énergie électrique comprenant le système de connexion (1) selon l'une quelconque des revendications précédentes, de préférence dans laquelle :
- le système de connexion (1) comprend une paroi (12) formant un godet de l'unité de stockage (2), ou
- le système de connexion (1) comprend une paroi (12) formant une gaine de l'unité de stockage (2), de préférence la paroi (12) comprend des éléments de fixation (14) de la paroi (12) sur l'unité de stockage (2), de façon à être montée amovible sur l'unité de stockage (2).

14. Ensemble d'alimentation électrique (3) comprenant plusieurs unités de stockage, au moins une unité de stockage étant une unité de stockage (2) selon la revendication précédente, de préférence chaque unité de stockage (2) comprend un système de connexion (1), les systèmes de connexion (1) d'au moins une partie des unités de stockage (2) comprenant au moins deux modules (100, 101) de connexion magnétiques de façon à former des verrous magnétiques (10) immobilisant entre elles lesdites unités de stockage (2) dans l'une et l'autre de leur première et deuxième position.

15. Dispositif d'alimentation (4) électrique comprenant au moins une unité de stockage (1) selon la revendication 13, et un support (40) configuré pour recevoir l'au moins une unité de stockage (2), de préférence le support (40) comprend au moins un deuxième module (101) de connexion magnétique configuré pour coopérer avec le premier module (100) de connexion magnétique d'un système de connexion (1).
